# EUROPEAN PATENT SPECIFICATION

(11) **EP 2 762 887 B1**
(45) Date of publication and mention of the grant of the patent: **27.02.2019**
(21) Application number: 11873277.5
(22) Date of filing: 27.09.2011
(51) Int. Cl.: G01N 35/10, G01N 35/00, G01N 21/25

(54) **FULL-AUTOMATIC IMMUNITY ANALYZER AND DETECTION METHOD THEREOF**
VOLLAUTOMATISCHER IMMUNITÄTSANALYSATOR UND NACHWEISVERFAHREN DAFÜR
ANALYSEUR D'IMMUNITÉ ENTIÈREMENT AUTOMATIQUE ET SON PROCÉDÉ DE DÉTECTION

(43) Date of publication of application: 06.08.2014
(73) Proprietor: Shenzhen Yhlo Biotech Co., Ltd., Shenzhen, Guangdong 518054 (CN)
(72) Inventor: HU, Deming, Shenzhen Guangdong 518054 (CN); LIU, Qingbo, Shenzhen Guangdong 518054 (CN); HE, Lin, Shenzhen Guangdong 518054 (CN); YANG, Hui, Shenzhen Guangdong 518054 (CN)
(74) Representative: Hanna Moore + Curley
(86) International application number: PCT/CN2011/080249
(87) International publication number: WO 2013/044454

(56) References cited:
- EP-A1- 2 154 513
- WO-A1-2010/107042
- CN-A- 101 135 694
- CN-A- 101 308 158
- CN-A- 102 116 771
- CN-A- 102 147 405
- CN-A- 102 445 557
- CN-U- 201 689 093
- US-A- 3 994 594
- US-A- 5 336 467
- US-A- 5 428 993
- US-A1- 2009 133 512
- US-A1- 2010 101 339
- US-B1- 6 500 388

## Description

### Field of the Invention

The present invention relates to a full-automatic immunity analyzer and a detection method thereof. The method and the analyzer are mainly used for quantitative determination or qualitative detection of antigen substances such as antigens of various pathogenic microorganisms in biological samples such as serum, sputum, urine, feces and bile of human samples, or antibodies generated from bodies infected with these pathogenic microorganism antigens, as well as autoantibodies in blood of patients of autoimmune diseases such as systemic lupus erythematosus, phospholipid syndrome, rheumatoid arthritis, scleroderma, autoimmune liver disease, sicca syndrome, systemic vasculitis, polymyositis, dermatomyositis, autoimmune thyroid disease and gastrointestinal disease, other immune indices such as tumor markers, by an enzyme-linked immuno sorbent assay (ELISA) method.

### Background of the Invention

ELISA, as a method in many immunoassay techniques, has been widely applied in the analysis field of clinical medicine, animal quarantine, food science, plant virus, drug residue, pest control and the like. This method has high specificity and sensitivity, nearly all soluble antigen-antibody systems can be detected using the method, and the minimum detection value of the method can reach the level of ng and even pg. Compared with radioimmunoassay, the ELISA has the advantage that markers are stable and do not have radiological hazards; and compared with fluoroimmunoassay, the ELISA is more objective in result determination.

At present, commercial ELISA items or categories of reagents include antigens or antibodies of pathogens, proteins, non-peptide hormones and drugs in clinical medicine detection, food microorganisms, microbial toxins, residual pesticides and food components in food detection, drug residues, toxins, microorganisms and transgenic products in aquatic product detection, as well as detection of various pathogens, pesticide residue detection and veterinary drug residue detection in plant virus detection and animal quarantine, etc.

In the ELISA, a complete ELISA kit should include a coated solid phase carrier, an enzyme conjugate, a chromogenic substrate, a reaction stop solution, various diluents and a buffer solution, as well as a standard solution, a calibration solution, a positive quality control material or control serum, a negative quality control material or control serum, etc. used in detection. The ELISA needs multiple reagents in detection, these reagents are sequentially added according to the needs of test reaction, and micro-pores of a detection reaction plate need to be washed for many times at the same time, so the manual operation is relatively tedious. To simplify the operation, particularly simplify the tedious operation of adding detected samples and detection reagents and repeatedly adding, sucking and discarding washing solutions in the washing process, various instruments for ELISA have been developed at present.

Aiming at four tedious operations of adding samples, adding reagents, washing and reading chromogenic reaction results in the ELISA, ELISA analyzers in the prior art deal with the operations using a separated method and a combined method respectively.

The separated ELISA analyzers mainly include an enzyme-labeling instrument and a plate washing machine, which go through the processes of sample adding, reagent adding, incubation, washing and the like, and finally determine results through absorbance analysis. The enzyme-labeling instrument is essentially a visible light photoelectric colorimeter special for absorbance measurement of a micropore plate, and common brands and models of the enzyme-labeling instrument for laboratories are respectively MK3 of LABSYS TEMS Company, SPECTR ACLASSIC of TECAN Company, Elx800 of BIOTEK Company, 128c of CLINIBIO Company, 2010 of ANTHOS Company, CF5000 of Aerospace 283 Factory, Anayech 828 of Shanghai Antai Company, XD711 of Shanghai Xunda Company, as well as 450, 550, Benchmark and Utramark of BIORAD Company, etc. The plate washing machine is essentially a machine special for adding, sucking and discarding of micropore plate washing solutions, and common brands and models of the plate washing machine for laboratories are respectively AT-828 model of Shanghai Antai Company, PW-960 model of Shenzhen Huisong Company, KWP-100 model of Shenzhen Kate Company, DNX-962 model of Beijing Pulang Technology Company and the like. Most of laboratories carrying out the ELISA are equipped with the enzyme-labeling instrument and the plate washing machine which are important instruments necessary for the laboratories. Through the enzyme-labeling instrument, absorbance measurement in the ELISA is simple and quick and is realized within 10 seconds for a whole plate with 12x8 pores or 8x12 pores, and a relatively wide absorbance measurement range A=0-6.0 is achieved; and through a 340nm light filter, the spectrum detection is expanded to an ultraviolet range. Meanwhile, the enzyme-labeling instrument also has an incubation function and a dynamic detection function, and greatly propels and promotes wide application of the ELISA technology. Like the enzyme-labeling instrument, the equipped plate washing machine not only simplifies the tedious washing operation in the ELISA, but also has the functions of bottom flushing, two-point liquid suction, plate-type/ strip-type plate washing, oscillation, position adjustment, automatic pipeline cleaning, automatic liquid replacement, storage of multiple washing procedures and the like in addition to the basic functions of setting the number of cleaning, number of micropore plates to be cleaned, soaking time and the like, thus fully ensuring the effect of washing test and thereby ensuring convenience and quickness of experimental detection and washing quality.

The combined ELISA analyzers are divided into three types: a full-automatic ELISA system, an automatic sample treatment system and an assembly line work type ELISA combined system. The full-automatic ELISA system integrates all steps ranging from sample adding, reagent adding, incubation, washing, oscillation, color comparison to qualitative or quantitative analysis and report storage and printing in an ELISA experiment into one instrument, and the steps are implemented by the instrument according to various ELISAs or programs designed by customers in advance. In the full-automatic ELISA system, common brands and models for laboratories at present are FAME of HAMILTON Company, CAA of BIORAD Company, AMP of AusBio company, Minilyeser of TECAN Company, TEKTIME of ORGANO Company, Personal LAB of DIVISION STRUMENTI Company, DSX of DYNDRX Company, Flex Tek2 of Aksu Company, TRIURUS of BIOASIA Company and the like. The automatic sample treatment system is mainly used for accomplishing the steps of adding samples, adding reagents, diluting, titrating, incubating, washing and the like, which are tedious in operation and prone to get wrong through manpower in ELISA experiments, the results are determined by the enzyme-labeling instrument after the steps are completed, and common brands and models for laboratories are MINITRED of TECAN Company, HYPREPTLUS of HYPERION Company, DLAS Ultra of DYNEX Company and the like. In the assembly line work type ELISA combined system, according to the processes and conditions required by ELISA, a liquid adding and taking system module, a constant temperature incubating module, a plate washing system module and a result reading system module are designed and arranged according to the type and steps of the ELISA, these system modules are connected in series using a track, and the system modules can independently complete tasks under the control of a system computer, or cooperate with each other to complete the reaction process together. For the technical prototypes of common brands and models for laboratories, see invention patent publication No. CN101303350A entitled Assembly Line Type Full-automatic ELISA Workstation, invention patent publication No. CN1885037A entitled Full-automatic ELISA System and the like.

To meet special requirements of the ELISA technology, the micro plate-type ELISA analyzer recently has made some new development in various aspects, for example, has developed from a 96-pore mode to a 384-pore or 1536-pore mode, an enzyme-labeling instrument capable of measuring 384-pore micropore plates has been launched by LABSYSTEMS Company and BIOTEK Company, and Utramark capable of measuring 384-pore and 1536-pore micropore plates has been launched by BIORAD Company, and a plate washing machine for 384-pore and 1536-pore micropore plates has also been researched and come out at the same time; and an enzyme-labeling instrument capable of holding light filters for as many as 10 wavelengths and adopting a grating light splitting principle has come out, so that the technical performances of wider wavelength analysis range, wavelength accuracy and repeatability, measurement accuracy and repeatability, linearity, measurement speed and the like are more excellent. Launch of these new methods, new technologies, new forms, new structures and new devices greatly promotes the application of the ELISA, so that the ELISA becomes an immune detection technology with the widest application range, largest number of customers using it, largest application amount and highest market occupancy.

However, although the micropore plate type ELISA method and instrument have achieved significant development and progress in numerous aspects compared with the ELISA prototype technology, they still have many shortcomings, problems or limitations in actual use, and to sum up, these shortcomings, problems and limitations are mainly on the following several aspects.
1. when 12x8 type, 8x12 type or whole-plate type dedicated micropore plates of 96 pores or multiple 96 pores are used as antigen or antibody coating articles and reaction containers, the micropore plates can only be used in 12 batches, 8 batches or wholly used at a time. If the micropore plates are used in batch, the general plate washing machine can not be adopted to wash the plates, and reaction holes can only be washed one by one by adding, sucking and discarding a washing solution, so the operation is extremely tedious; and at least 8 portions or 12 portions of samples are detected/tested in one batch, otherwise, reagents can be wasted. If the whole plates are used at a time, 96 portions or multiple 96 portions of samples are detected/tested, otherwise, reagents can also be wasted.
2. the reagents for qualitative detection at least include a sample diluent, a washing solution, an enzyme bonder, an enzyme reaction substrate, a chromogenic reagent, a stop solution, positive control serum and negative control serum, namely totally eight reagents. The reagents for quantitative detection at least include a diluent, a washing solution, an enzyme bonder, an enzyme reaction substrate, a chromogenic reagent, a stop solution and standard materials or calibration materials of at least five levels, namely totally eleven reagents. Each detection reagent is accommodated in a reagent bottle, and a suction nozzle needs to be replaced to add a sample, a reagent or a washing solution into micropores of a reaction container, namely a micropore plate when one reagent is used, so that many kinds and large amounts of reagent bottles are involved, and the operation of adding the reagents is extremely tedious. Even if a full-automatic ELISA analyzer is used or the charging quantity of each reagent is changed, the categories of the adopted reagents can not be reduced.
3. when quantity configuration and use of detection item matched reagents required by a customer are respectively the product of the number of items and 96 portions, and if 10 items need to be detected, the number of each of the configuration and use of the reagents is 10x96 portions; and if 10 different items of only one sample need to be detected, 10x96 portions of reagents also need to be configured.
4. the detection reagents and samples are open in the detection process, so that cross contamination is easily caused among various reagents or samples to affect detection results or directly affect operators.
5. one detection reagent can only be used for detecting one item, and if two or three items need to be detected, three different detection reagents or kits are needed for detecting operation respectively.
6. for the color of a colored solution in each reaction hole, optical reading is performed only once when a single wavelength method is adopted, and optical reading is performed again by using a light filter of another wavelength when a dual-wavelength method is adopted, so two or more times of optical reading can not be performed on the color of the colored solution in the same reaction hole at different time points.
7. 2-pore, 4-pore, 8-pore, 12-pore or 96-pore washing solution is added or sucked into one micropore plate at a time in a batch washing manner, so the washing solution can not be added or sucked separately in batch.
8. only single item can be detected, or multiple items can not be detected at the same time.
9. a bar code of reagent information does not exist in each detection, or the information of the bar code is incomplete or is only the information of a kit, the production batch and expiration date information of a detection reagent can be learnt only by viewing the identification of the outer packaging box of the kit, and the learnt information is incontrollable in the detection process and has great randomness.
10. a sample adding, working solution/reagent adding or liquid sucking system of the instrument, which has a linear structure, moves or travels linearly.
11. a mechanical electronic structure for mixing/ uniformly mixing liquid and the like and a control system thereof are not adopted.
12. the detection items are different according to different reagents and are randomly selected and used.
13. the detection methods are traditional ELISA methods, and are determined by the selected reagents.
14. single-item or multi-item detection can not be performed timely according to the conditions of samples.

Although Chinese invention patent No. 201010042628. X proposed by the present applicant on 04 January 2010 and published as CN 102116771 on 06 July 2011 solves the above-mentioned technical problems, the invention-creation still has some shortcomings, for example, 1. a liquid level sensor is arranged in a liquid storage component and configured to detect the storage amount of liquid by adopting a four-level liquid level resistor sensing principle, so that the reliability is poor, the usage amount of the working liquid can not be stably and accurately acquired, and the washing effect and quality can not be guaranteed; 2. a dynamic detection method adopted by optical detection systems need three sets of optical detection systems and six optical channels for detection, so that the transmission direction of light in optical fibers is changed, and the optical fibers connected with the three sets of optical detection systems are inconsistent in length, low in stability and high in cost, have optical channel difference and are greatly affected by the environment; 3. a liquid path system is complex, and many electromagnetic valves and washing pumps are needed, and thus the cost is high; 4. an injector driving device of a filling mechanism is formed by mounting a step motor and a screw on the bottom surface of a lower fixed plate, so the stability is low and the service life is short; 5. a filling needle of the filling mechanism is used for puncturing and adding simultaneously, so the puncturing reliability is poor, and the service life of the filling needle is short; 6. a washing needle of a washing mechanism adopts a spring structure to adapt to the height of a hole bottom, and the compression force of the spring rises linearly and is increased with increase of a compression travel, so the washing needle is easy to damage and short in service life; and 7. a reaction disc is locally heated by adopting a hot blast heater, thus leading to the technical defects of non-uniform heating, high noise, low heat efficiency and the like.

### Summary of the Invention

The invention is defined by the appended claims. The main object of the present invention is to overcome the technical defects which arise when a filling needle of the filling mechanism is used for puncturing and adding simultaneously and when the storage amount of liquid is detected by adopting a liquid level resistor sensing principle by using the existing full-automatic immunity analyzer, and provide a full-automatic immunity analyzer and a detection method thereof.

To solve the technical problems put forward in the present invention, a technical solution is adopted: a full-automatic immunity analyzer includes a main frame component, a reaction disc component, a filling mechanism, washing mechanisms, a liquid storage component, a liquid path system, a temperature control device, an optical detection system and a control system; the main frame component includes a frame baseplate, struts are arranged on the frame baseplate, and a lower fixed plate and an upper fixed plate are successively arranged on the struts from bottom to top; the reaction disc component is arranged between the upper fixed plate and the lower fixed plate, more than four loading troughs for clamping reagent vessels formed by sample holes, reagent holes, reaction holes with optical path permeability and flat bottoms, and diluting holes are formed on the reaction disc component in an annular array manner, and a reaction disc driving component for driving the reaction disc component to rotate is fixedly arranged below the lower fixed plate; the filling mechanism is arranged above the upper fixed plate and configured to suck and add samples or reagents among the holes of the reagent vessels placed in the loading troughs of the reaction disc component; the filling mechanism includes an injector device, filling needles, a filling needle moving device and a filling needle cleaning trough; the washing mechanisms are arranged above the upper fixed plate and configured to wash the reaction holes of the reagent vessels placed in the loading troughs of the reaction disc component; each washing mechanism includes a liquid adding washing needle, a draining washing needle, a washing needle moving device and a washing needle cleaning trough; the liquid storage component is arranged on the frame baseplate, and includes a cleaning liquid bottle for accommodating a cleaning liquid, a washing liquid bottle for accommodating a washing liquid A and a washing liquid bottle for accommodating a washing liquid B; the liquid path system is connected with the liquid storage component, the washing mechanisms and the filling mechanism and configured to deliver the working liquid in the liquid storage component to the washing mechanisms and the filling mechanism; the temperature control device is arranged below the reaction disc component and configured to heat the reagent vessels clamped on the reaction disc component; the optical detection system includes a light transmitter body and a light receiver body and is used for optical detection of substances in the reaction holes of the reagent vessels clamped in the reaction disc loading troughs, wherein the light transmitter body is arranged above the upper fixed plate, and the light receiver body is arranged at a position opposite to the light transmitter body below the reaction disc component; the control system includes an instrument control circuit and embedded software written in the instrument control circuit, and the reaction disc driving component of the reaction disc component, the filling needle moving device of the filling mechanism, the washing needle moving devices of the washing mechanisms, washing pumps and electromagnetic valves of the liquid path system, the temperature control device, the optical detection system and the instrument control circuit are controlled to operate according to program instructions of the embedded software; and the cleaning liquid bottle, the washing liquid A bottle and the washing liquid B bottle of the liquid storage component are three independent bottles, and at the bottom of each of the cleaning liquid bottle, the washing liquid A bottle and the washing liquid B bottle there is provided an online weighing sensing device for monitoring the weight of the working liquid in the bottle and providing signals indicating a usage amount and a remaining amount of the working liquid in the bottle to the control system.

The light transmitter body includes two sets of luminescent lamps arranged side by side, light sources of the two sets of luminescent lamps are LED light sources, an optical fiber is arranged at the front end of each LED light source, a light filter is arranged at the front end of each optical fiber, and a condensing lens is arranged at the front end of each light filter, wherein the two luminescent lamps are provided with the light filters with different wavelengths; and the light receiver body includes condensing lenses corresponding to the two luminescent lamps and two light receivers arranged behind the condensing lenses.

The filling mechanism also includes a first puncture needle and a second puncture needle; the filling needles include a first filling needle and a second filling needle; the filling needle moving device includes a pulley, a pulley guide rail fixedly mounted to the upper fixed plate is arranged at the bottom of the pulley, and a pulley moving component for driving the pulley to move horizontally along the pulley guide rail is arranged on a side of the pulley guide rail, wherein the pulley includes a pulley support, and a first needle guide rail, a second needle guide rail, a third needle guide rail and a fourth needle guide rail are vertically arranged on the front side of the pulley support; the first filling needle, the second filling needle, the first puncture needle and the second puncture needle are movably clamped on the first needle guide rail, the second needle guide rail, the third needle guide rail and the fourth needle guide rail through a first filling needle sliding block, a second filling needle sliding block, a first puncture needle sliding block and a second puncture needle sliding block respectively; a filling needle lifting driving device for vertically and alternately moving the first filling needle and the second filling needle and a puncture needle lifting driving device for vertically and alternately moving the first puncture needle and the second puncture needle are arranged on the back of the pulley support; the filling needle lifting driving device includes a needle moving motor mounted to the pulley support, a needle moving driving belt wheel is arranged on a shaft of the needle moving motor, a needle moving driven belt wheel is arranged on the pulley support, a needle moving synchronous belt is arranged between the needle moving driving belt wheel and the needle moving driven belt wheel, and belt clamps are fixedly connected between one side of the needle moving synchronous belt and the first filling needle sliding block and between the other side and the second filling needle sliding block respectively; the puncture needle lifting driving device and the filling needle lifting driving device have the same structure, and belt clamps are fixedly connected between one side of the needle moving synchronous belt and the first puncture needle sliding block and between the other side and the second puncture needle sliding block respectively, wherein the pulley moving component includes a pulley motor fixedly mounted to the upper fixed plate and a pulley driven belt wheel arranged on the upper fixed plate, a pulley driving belt wheel is arranged on a shaft of the pulley motor, a pulley synchronous belt is arranged between the pulley driving belt wheel and the pulley driven belt wheel, and the pulley synchronous belt is fixedly connected with the bottom of the pulley support through the belt clamps.

The washing mechanisms include a first washing mechanism and a second washing mechanism with the same structure; each of the two sets of washing mechanisms includes the liquid adding washing needle, the draining washing needle, the washing needle moving device and the washing needle cleaning trough; the washing needle moving device includes a washing rack fixedly mounted to the upper fixed plate, a washing motor is arranged on the washing rack, a driving belt wheel is arranged on a shaft of the washing motor, a driven belt wheel is arranged on the washing rack, and a synchronous belt is arranged between the driving belt wheel and the driven belt wheel; a guide rod is vertically arranged on the washing rack, and a washing needle holder for fixing the liquid adding washing needle and the draining washing needle is movably sleeved on the guide rod; a guide rail parallel to the guide rod is arranged on the washing rack, a sliding block is arranged on the guide rail, a belt clamp fixedly connected with the synchronous belt and driving the sliding block to slide vertically along with running of the synchronous belt is arranged on the sliding block, the sliding block is provided with a clamping block that is raised upwards, and the washing needle holder is provided with a clamping groove matched with the clamping block, ascending along with the sliding block when the sliding block ascends so as to lift the liquid adding washing needle and the draining washing needle, and falling freely along with the washing needle holder by self gravity when the sliding block descends.

The liquid path system includes a pipeline for pumping the cleaning liquid in the cleaning liquid bottle and the washing liquid in the washing liquid A bottle to the liquid adding washing needle of the first washing component for discharging, an electromagnetic valve, a washing pump, a pipeline connected with the draining washing needle of the first washing component to drain the liquid to a main waste liquid trough, a draining pump, a pipeline for draining the waste liquid in the washing needle cleaning trough of the first washing component to the main waste liquid trough, a pipeline for pumping the cleaning liquid in the cleaning liquid bottle and the washing liquid in the washing liquid B bottle to the liquid adding washing needle of the second washing component for discharging, an electromagnetic valve, a washing pump, a pipeline connected with the draining washing needle of the second washing component to drain the liquid to the main waste liquid trough, a draining pump, a pipeline for draining the waste liquid in the washing needle cleaning trough of the second washing component to the main waste liquid trough, a pipeline for pumping the cleaning liquid in the cleaning liquid bottle to clean the injector device and filling needles of the filling mechanism, a washing pump, electromagnetic valves, and a pipeline for draining the waste liquid in the filling needle washing trough produced by cleaning the filling mechanism to the main waste liquid trough.

The temperature control device is a disc-like electric heating plate corresponding to the reaction disc component.

The injector device of the filling mechanism is a piston driven device consisting of a step motor and a screw and having a packaged structure.

A built-in bar code recognizer for recognizing an item bar code on a handle of a reagent vessel and transmitting a recognition signal to the control system is arranged on the upper fixed plate.

A coder for sensing the rotating angle of a main shaft, providing moving information of the reaction disc component to the control system and controlling the running state of the step motor through the control system is arranged at the bottom end of the main shaft and accurately positions the reaction disc component.

The instrument control circuit of the control system includes a USB interface for communicating with a control host, and 1 to 10 full-automatic immunity analyzers may be controlled by one control host.

A method for implementing immune detection by using the above-mentioned full-automatic immunity analyzer includes the following steps:
1. putting a to-be-detected sample into a sample hole of a reagent vessel, an item information bar code corresponding to the sample being stuck to a handle of the reagent vessel;
2. clamping the reagent vessel into a loading trough of a reaction disc component;
3. starting a control system so that the reaction disc component runs, rotating the reagent vessel to a position corresponding to a filling mechanism, adding the sample in the sample hole into a diluting hole by the filling mechanism, adding the diluent in one reagent hole into the diluting hole for dilution, then adding the mixture into a reaction hole, and performing reaction and washing according to preset conditions of the control system, wherein in the washing process, the control system calculates the consumption of the three kinds of working liquid according to the detection signals of three online weighing sensing devices at the bottoms of a cleaning liquid bottle, a washing liquid A bottle and a washing liquid B bottle before and after washing, determines whether the washing process is normal, and gives an alarm for alert if the washing process is not normal; immediately reading an absorbance value by adopting a dynamic method after the last reagent is added, or injecting a stop solution into the reaction hole after the reaction is completed to stop the reaction, and then reading the absorbance value by adopting an end point method;
4. rotating the reagent vessel to a position corresponding to an optical detection system by the reaction disc component when the absorbance value is read, performing optical detection on a substance in the reaction hole by the optical detection system, supplying a detection result to the control system, and processing, storing and outputting the detection result by the control system.

The reagent comprises an antigen or antibody, an enzyme-labeling antigen or antibody, an enzyme chromogenic substrate, a diluent, an adsorption solution or a stop solution for detection, the specific type of the reagent is set according to the requirement of a detection item, and these reagents are collectively accommodated in a specific disposable independent reagent device for an individual.

The present invention has the following beneficial effects: compared with other immunity analysis methods, reagent devices and analyzers, the novel immunity detection method and instrument of the present invention using the independent, dedicated and disposable reagent device (reagent vessel) for an individual with an extremely unique structure and shape and the dedicated full-automatic immunity analyzer matched with the reagent device have the following advantages.

First, the instrument adopts an independent detection reagent for an individual and an analysis device, does not need a 12x8 type, 8x12 type or whole-plate type 96-pore dedicated ELISA micropore plate as an antigen or antibody coating article and a reaction container like in a general ELISA method, and can detect the corresponding item by using only one sample in use, so the reagent is not wasted. If the quantity of the sample exceeds one portion, the reagent and the analysis device may be used according to the number of actual samples.

Second, no matter for qualitative detection or quantitative detection, each reagent necessary for detection is accommodated in a reagent hole of a reagent device, and the detection reagents do not need to be accommodated in different reagent bottles respectively, so that the operation is extremely simple and convenient, operation errors are not likely to occur, and the correctness of detection results is ensured.

Third, each reagent device has a dedicated bar code, and the value of the bar code includes information about a detection item code corresponding to each detection item, the production batch of a detection reagent, the expiration date of the reagent, a qualitative detection correction coefficient, a quantitative measurement standard curve parameter, a specific ELISA type, the serial number of a reagent device and the like, can not be randomly changed, is strictly controlled in use, and is recognized to prevent sending out a detection report particularly when the detection reagent exceeding the expiration date is used, so that the accuracy of detection can be ensured.

Fourth, each detection reagent is effectively separated and sealed, so there is no cross contamination among various reagents which affects the detection results.

Fifth, a reagent device special for a specific analyzer is used, and the detection reagent or sample is added by using a full-automatic precision liquid adder in the detection process, so that the operation is automatic, the adding amount is accurate, and the accuracy and precision of the detection results are high.

Sixth, quantity configuration and use of detection item matched reagents are determined according to actual usage needs, particularly for multi-item detection, a proper amount is configured, and usage beyond configuration is avoided.

Seventh, on a reagent device, the detection reagents of 2 to 4 items may be placed, and 2 to 4 items of one sample may be simultaneously detected, or 1 to 3 dilution multiples of the same item of one sample may be detected, or 2 to 4 times of repeated detection of the same item of one sample may be implemented.

Eighth, by adopting the full-automatic separate ELISA instrument analysis method on the detection operation, full-automatic detection of independent items or combined items of ELISA items is realized, and random use of the detection is ensured.

Ninth, on detection samples and qualities, qualitative/ quantitative detection of individuals may be performed, and qualitative/ quantitative detection of batch samples may also be performed, thus the detection flexibility is ensured.

Tenth, the end point method is adopted in detection reading and data processing, and the optical path is singly tested after the stop solution is added and the reaction is stopped, thus the detection accuracy and stability are ensured and the detection is affected little by the environment.

Eleventh, on the treatment of the detection reagents, various reagents required by the ELISA are collectively loaded in a unique reagent device, so that not only the independence of each detection item is ensured, but also the use convenience of each detection reagent is ensured.

Twelfth, on the detection speed, a rotating micro shaking manner is adopted to accelerate mixing reaction of liquid phases and promote bonding of reaction molecules, so that the reaction time is greatly shortened, the detection speed is improved, the manual operation time is shortened, and the rapidity and instantaneity of the detection are ensured.

Thirteenth, the instrument equipped with the precise and complete temperature control system and reagent and liquid level detection systems is sensitive in reaction and high in control precision, ensures the reaction of the ELISA at a constant temperature under a liquid phase condition, ensures the repeatability of the detection results, and further ensures the accuracy of the detection.

In addition, compared with the technical solution of the Chinese invention-creation patent with the patent application number 201010042628.X, the present invention has the following beneficial effects.

First, at the bottom of each of the cleaning liquid bottle, the washing liquid A bottle and the washing liquid B bottle, there is provided an online weighing sensing device for monitoring the weight of the working liquid in the bottle and providing signals indicating a usage amount and a remaining amount of the working liquid in the bottle to the control system, so that the storage amount and usage amount of the working liquid in the liquid storage component may be accurately monitored in real time, the reliability of control is good, the washing quality is guaranteed, and the fault of the liquid path system may be timely discovered.

Second, one set of optical detection system is needed, the absorbance value may be read by adopting the dynamic method after the last reaction reagent is added into the reaction hole, or the absorbance value is read after the stop solution is added into the reaction hole to stop the reaction, and the number of optical detection system is smaller than that (three sets) of optical detection systems needed by the previous triple optical reading and multi-data fitting analysis method.

Third, the liquid path system is simplified, and a few electromagnetic valves and washing pumps are needed, so that the production cost is reduced.

Fourth, the injector driving device of the filling mechanism with a packaged structure is high in stability, small in size, low in cost and long in service life.

Fifth, the reaction disc component is heated by adopting the electric heating plate, so heating is uniform, there is no noise, and the heat efficiency is high.

Sixth, under the condition that power components of the filling mechanism are not increased, the puncture needles for pore sealing films special for the reagent vessels are added, so that the filling needles are specially used for adding of the reagents or samples, the service life of the filling needles is prolonged, and the puncture reliability is improved at the same time.

Seven, each washing mechanism adopts the gravity structure to adapt to the height of the hole bottom, and a downward acting force of the draining washing needle is not increased due to being affected by downward movement of the sliding block after the draining washing needle touches the bottom, so that the washing needle is prevented from being damaged and is longer in service life and more reliable.

Eighth, the main control software is installed in the external control host, one to ten full-automatic immunity analyzers may be controlled to operate by one control host through the USB interface, and the analyzers may be flexibly configured by a user according to the amount of the samples, so that the detection requirements of large, medium and small medical institutions are comprehensively met.

### Brief Description of the Drawings

Fig. 1 is a schematic diagram of a whole structure of the present invention;
Fig. 2 is a structural schematic diagram of a top view of a reaction disc component of the present invention;
Fig. 3 is a schematic diagram of an A-A section structure of Fig. 2;
Fig. 4 is a schematic diagram of a cross-section structure of a reagent vessel of the present invention;
Fig. 5 is a structural schematic diagram of the reagent vessel of the present invention before being placed into a loading trough of the reaction disc component;
Fig. 6 is a structural schematic diagram of the reagent vessel of the present invention after being placed into the loading trough of the reaction disc component;
Fig. 7 is a front stereoscopic structural schematic diagram of a filling mechanism of the present invention;
Fig. 8 is a back stereoscopic structural schematic diagram of the filling mechanism of the present invention;
Fig. 9 is a stereoscopic structural schematic diagram of one group of washing mechanism of the present invention;
Fig. 10 is a structural schematic diagram of an optical detection system of the present invention;
Fig. 11 is a schematic diagram of a mounting structure of an electric heating plate of the present invention;
Fig. 12 is a structural schematic diagram of a liquid path system of the present invention;
Fig. 13 is a block diagram of a control system of the present invention.

### Detailed Description of the Embodiments

The structure of the present invention will be further described below in conjunction with the accompanying drawings and preferred specific embodiments.

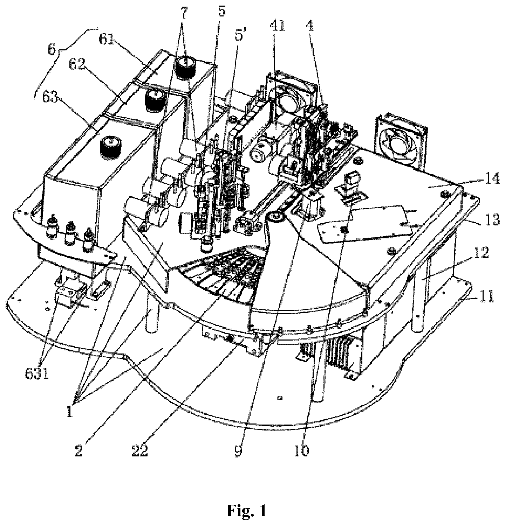

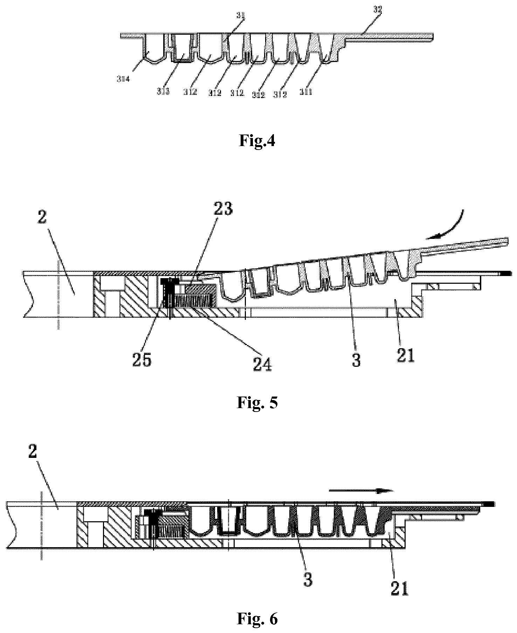

With reference to Figs. 1 and 5, a full-automatic immunity analyzer includes a main frame component 1, a reaction disc component 2, reagent vessels 3, a filling mechanism 4, washing mechanisms 5, a liquid storage component 6, a liquid path system 7, a temperature control device 8, an optical detection system 9, a built-in bar code recognizer 10 and a control system.

The main frame component 1 includes a frame baseplate 11, struts 12 are arranged on the frame baseplate 11, and a lower fixed plate 13 and an upper fixed plate 14 are successively arranged on the struts 12 from bottom to top.

With reference to Figs. 1, 2, 3, 5 and 6, the reaction disc component 2 is arranged between the upper fixed plate 14 and the lower fixed plate 13 and has a disc-shaped structure, more than four (30 loading troughs are taken as an example for illustration in the accompanying drawings) loading troughs 21 for clamping the reagent vessels 3 are formed on the reaction disc component 2 in an annular array manner, and the reagent vessels 3 are clamped in the loading troughs 21 of the reaction disc component 2. To clamp each reagent vessel 3 stably, a sliding block 23 for clamping the reagent vessel, a spring 24 for applying an elastic force to the sliding block 23 and a lock pin 25 for preventing the sliding block from dropping are arranged on the wall of the front end of each loading trough 21. A reaction disc driving component 22 for driving the reaction disc component 2 to rotate is fixedly arranged below the lower fixed plate 13. The reaction disc driving component 22 includes a main shaft 221 fixedly connected with the center of the reaction disc component 2, the main shaft 221 is connected with the lower fixed plate 13 through a bearing 222 and a main shaft seat 223, a driven belt wheel 224 is arranged on the main shaft 221, a motor support seat 225 fixedly mounted to the lower fixed plate 13 is arranged on a side of the main shaft seat 223, a step motor 226 is arranged in the motor support seat 225, a driving belt wheel 227 is arranged on a motor shaft 2261 of the step motor 226, a synchronous toothed belt 228 is arranged between the driving belt wheel 227 and the driven belt wheel 224, and a belt wheel tensioner 2261 is arranged on the motor support seat 225. A coder 229 for sensing the rotating angle of the main shaft 221, providing moving information of the reaction disc component 2 to the control system, and controlling the running state of the step motor 226 through the control system is also arranged at the bottom end of the main shaft 221.

With reference to Fig. 4, the reagent vessel 3 includes a base body 31 and a handle 32 at one end of the base body. The base body 31 is provided with a sample hole 311, five reagent holes 312, a reaction hole 313 and a diluting hole 314, wherein the hole bottom of the reaction hole 313 is a flat bottom with optical path permeability; namely, when a colorless/ blank reagent solution is accommodated at the hole bottom, the absorbance value for visible light/ ultraviolet/ fluorescence is close to zero. An item bar code is stuck to the handle 32, and the information of the item bar code includes a detection item code of a detection reagent, the production batch of the detection reagent, the expiration date of the reagent, a qualitative detection correction coefficient, a quantitative measurement standard curve parameter, a specific ELISA type, the serial number of a reagent device and the like.

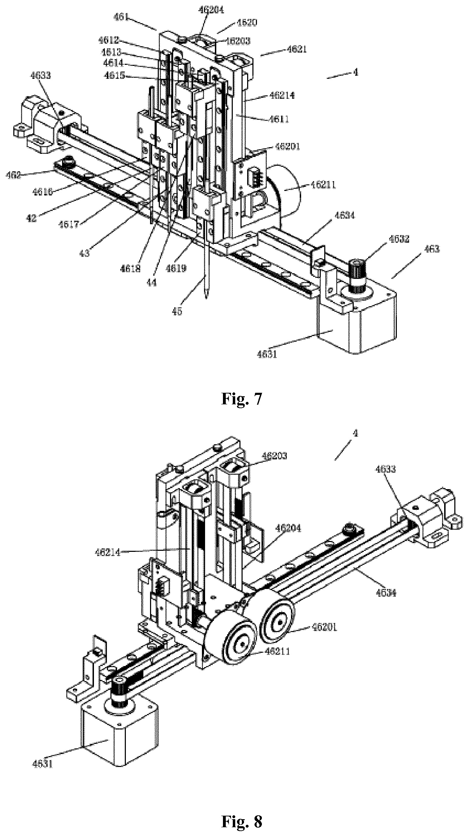

With reference to Figs. 1, 7 and 8, the filling mechanism 4 is arranged above the upper fixed plate 14 and configured to suck and add samples or reagents among the holes of the reagent vessels 3 placed in the loading troughs 21 of the reaction disc component; the filling mechanism 4 includes an injector device 41, filling needles 42 and 43, a filling needle moving device 46 and a filling needle cleaning trough 47; and compared with the existing filling mechanism, the filling mechanism also includes a first puncture needle 44 and a second puncture needle 45.

In this case, the injector device 41 is formed by the existing needle tube injector, step motor, lead screw and position sensor in an assembly manner, and a plunger, the lead screw and a motor shaft are integrally packaged, so that the precision is high, the error is small, the service life index is improved by ten to dozens of times, reagents may be used more accurately, the cost is reduced, the size is reduced to one fifth of the original size, and maintenance and repair are not needed.

The filling needles include a first filling needle 42 and a second filling needle 43; the filling needle moving device 46 is configured to execute horizontal or vertical moving operation on the first filling needle 42, the second filling needle 43, the first puncture needle 44 and the second puncture needle 45, so as to realize puncture of a sealing film for the reagent vessels 3 and adding of the samples or reagents.

The filling needle moving device 46 includes a pulley 461, a pulley guide rail 462 fixedly mounted to the upper fixed plate 14 is arranged at the bottom of the pulley 461, and a pulley moving component 463 for driving the pulley 461 to move horizontally along the pulley guide rail 462 is arranged on a side of the pulley guide rail 462, namely horizontal movement of the pulley 461 is realized through combination of the pulley guide rail 462 and the pulley moving component 463. The pulley 461 includes a pulley support 4611, and a first needle guide rail 4612, a second needle guide rail 4613, a third needle guide rail 4614 and a fourth needle guide rail 4615 are vertically arranged on the front side of the pulley support 4611; the first filling needle 42, the second filling needle 43, the first puncture needle 44 and the second puncture needle 45 are movably clamped on the first needle guide rail 4612, the second needle guide rail 4613, the third needle guide rail 4614 and the fourth needle guide rail 4615 through a first filling needle sliding block 4616, a second filling needle sliding block 4617, a first puncture needle sliding block 4618 and a second puncture needle sliding block 4619 respectively; and a filling needle lifting driving device 4620 for vertically and alternately moving the first filling needle 42 and the second filling needle 43 and a puncture needle lifting driving device 4621 for vertically and alternately moving the first puncture needle 44 and the second puncture needle 45 are arranged on the back of the pulley support 4611. The filling needle lifting driving device 4620 includes a needle moving motor 46201 mounted to the pulley support 4611, a needle moving driving belt wheel is arranged on a shaft of the needle moving motor 46201, a needle moving driven belt wheel 46203 is arranged on the pulley support 4611, a needle moving synchronous belt 46204 is arranged between the needle moving driving belt wheel and the needle moving driven belt wheel 46203, the needle moving synchronous belt 46204 is a belt with clamping teeth, belt clamps are fixedly connected between one side of the needle moving synchronous belt 46204 and the first filling needle sliding block 4616 and between the other side and the second filling needle sliding block 4617 respectively, and the first filling needle 42 and the second filling needle 43 are simultaneously controlled through one needle moving motor 46201; when the needle moving motor 46201 works, the moving directions of the first filling needle 42 and the second filling needle 43 are opposite, for example, when the first filling needle 42 ascends to a highest position, the second filling needle 43 descends to a lowest position, conversely, when the first filling needle 42 descends to a lowest position, the second filling needle 43 ascends to a highest position. The puncture needle lifting driving device 4621 and the filling needle lifting driving device 4620 have the same structure, belt clamps are fixedly connected between one side of a needle moving synchronous belt 46214 of the puncture needle lifting driving device 4621 and the first puncture needle sliding block 4618 and between the other side and the second puncture needle sliding block 4619 respectively, and a needle moving motor 46211 alternately controls the first puncture needle 44 and the second puncture needle 45 to move vertically.

The pulley moving component 463 includes a pulley motor 4631 fixedly mounted to the upper fixed plate 14 and a pulley driven belt wheel 4633 arranged on the upper fixed plate 14, a pulley driving belt wheel 4632 is arranged on a shaft of the pulley motor 4631, a pulley synchronous belt 4634 is arranged between the pulley driving belt wheel 4632 and the pulley driven belt wheel 4633, the pulley synchronous belt 4634 is fixedly connected with the bottom of the pulley support 4611 through the belt clamps, and the pulley is controlled to move by the pulley motor 4631.

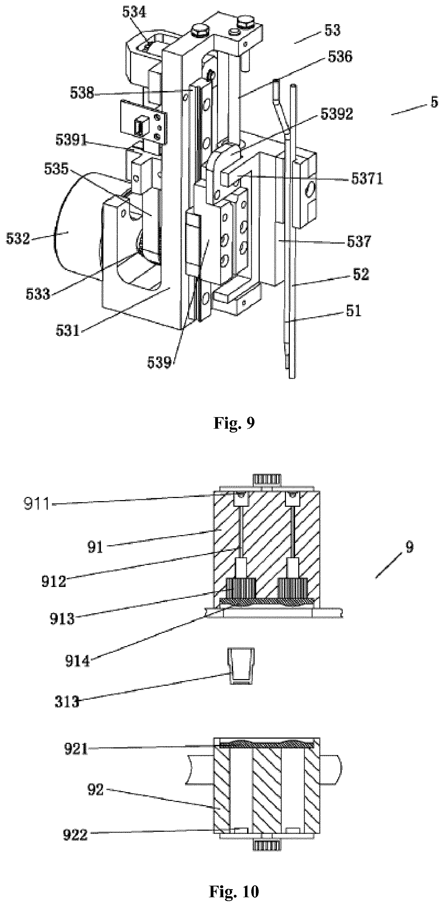

With reference to Figs. 1 and 9, the washing mechanisms 5, 5' include a first washing mechanism 5 and a second washing mechanism 5' with the same structure. The first washing mechanism is taken as an example for illustration in detail. The first washing mechanism 5 includes a liquid adding washing needle 51, a draining washing needle 52, a washing needle moving device 53 and a washing needle cleaning trough 54.

The washing needle moving device 53 includes a washing rack 531 fixedly mounted to the upper fixed plate 14, a washing motor 532 is arranged on the washing rack 531, a driving belt wheel 533 is arranged on a shaft of the washing motor 532, a driven belt wheel 534 is also arranged on the washing rack 531, and a synchronous belt 535 is arranged between the driving belt wheel 533 and the driven belt wheel 534; a guide rod 536 is vertically arranged on the washing rack 531, and a washing needle holder 537 for fixing the liquid adding washing needle 51 and the draining washing needle 52 is movably sleeved on the guide rod 536; a guide rail 538 parallel to the guide rod 536 is arranged on the washing rack 531, a sliding block 539 is arranged on the guide rail 538, a belt clamp 5391 fixedly connected with the synchronous belt 535 and driving the sliding block 539 to slide vertically along with running of the synchronous belt 535 is arranged on the sliding block 539, the sliding block 539 is provided with a clamping block 5392 which is raised upwards, and the washing needle holder 537 is provided with a clamping groove 5371 matched with the clamping block 5392, ascending along with the sliding block 539 when the sliding block 539 ascends, so as to upwardly lift the liquid adding washing needle 51 and the draining washing needle 52, and falling freely along with the washing needle holder 537 by self gravity when the sliding block 539 descends, namely the liquid adding washing needle 51 and the draining washing needle 52 are freely suspended above the sliding block 539 through the washing needle holder 537, to get rid of the pressing force of the sliding block 539. Because the draining washing needle 52 is lower than the liquid adding washing needle 51 and touches the bottom to discharge the washing liquid during washing, the structure effectively prolongs the service life of the draining washing needle 52.

With reference to Fig. 1, the liquid storage component 6 is arranged on the frame baseplate 11, and includes a cleaning liquid bottle 61, a washing liquid A bottle 62 and a washing liquid B bottle 63; the cleaning liquid bottle 61, the washing liquid A bottle 62 and the washing liquid B bottle 63 are three independent bottles separated from each other, and at the bottom of each of the cleaning liquid bottle 61, the washing liquid A bottle 62 and the washing liquid B bottle 63 there is provided an online weighing sensing device 631 (only one online weighing sensing device is shown in the figure) for monitoring the weight of the working liquid in the of the bottles 61, 62 and 63 and providing signals indicating a usage amount and a remaining amount of the working liquid in the bottle to the control system, so that the storage amount and usage amount of the working liquid in the liquid storage component 6 are accurately monitored in real time, the reliability is good, the washing quality is guaranteed, and the fault of the liquid path system can be timely discovered.

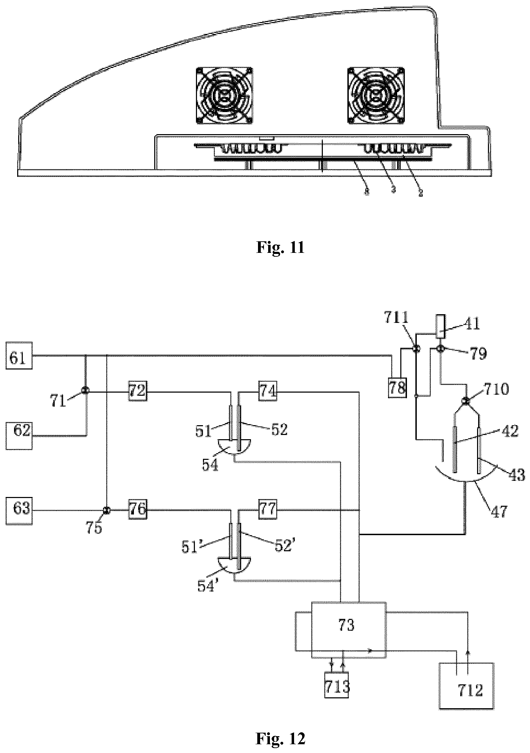

With reference to Figs. 1 and 12, the liquid path system 7 is connected with the liquid storage component 6, the washing mechanism 5 and the filling mechanism 4, and configured to deliver the working liquid in the liquid storage component 6 to the washing mechanism 5 and the filling mechanism 4.

The liquid path system 7 includes a pipeline for pumping the cleaning liquid in the cleaning liquid bottle 61 and the washing liquid in the washing liquid A bottle 62 to the liquid adding washing needle 51 of the first washing component for discharging, an electromagnetic valve 71, a washing pump 72, a pipeline connected with the draining washing needle 52 of the first washing component to drain the liquid to a main waste liquid trough 73, a draining pump 74, a pipeline for draining the waste liquid in the washing needle cleaning trough 54 of the first washing component to the main waste liquid trough 73, a pipeline for pumping the cleaning liquid in the cleaning liquid bottle 61 and the washing liquid in the washing liquid B bottle 63 to the liquid adding washing needle 51' of the second washing component for discharging, an electromagnetic valve (75), a washing pump (76), a pipeline connected with the draining washing needle 52' of the second washing component to drain the liquid to the main waste liquid trough (73), a draining pump (77), a pipeline for draining the waste liquid in the washing needle cleaning trough 54' of the second washing component to the main waste liquid trough (73), a pipeline for pumping the cleaning liquid in the cleaning liquid bottle 61 to clean the injector device 41 and filling needles 42 and 43 of the filling mechanism, a washing pump 78, electromagnetic valves 711, 79 and 710, and a pipeline for draining the waste liquid in the filling needle washing trough 47 produced by cleaning the filling mechanism to the main waste liquid trough 73. The main waste liquid trough 73 is also connected with a waste liquid barrel 712, and a draining pump 713 and a pipeline are arranged between the main waste liquid trough 73 and the waste liquid barrel 712.

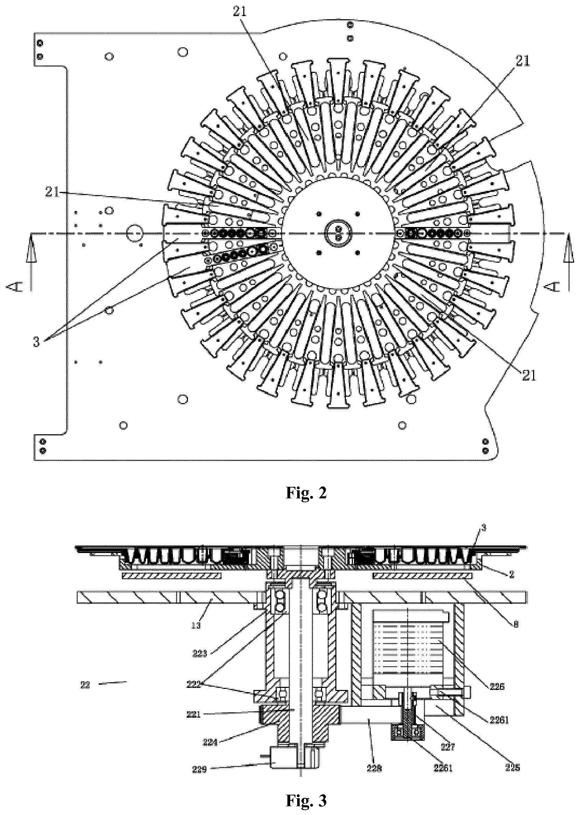

With reference to Figs. 3 and 11, the temperature control device 8 is arranged below the reaction disc component 2 and configured to heat the reaction disc component 2, namely heat the reaction hole of the reagent vessel 3, so as to provide a temperature environment required by sample reaction. The temperature control device 8 of the present invention is a disc-like electric heating plate of which the shape corresponds to the loading troughs of the reaction disc component.

With reference to Figs. 1 and 10, the optical detection system 9 includes a light transmitter body 91 and a light receiver body 92 and is used for optical detection of the reaction hole of the reagent vessel, wherein the light transmitter body is also arranged above the upper fixed plate, and the light receiver body is correspondingly arranged below the reaction disc component; the light transmitter body 91 includes two sets of luminescent lamps arranged side by side, each of the two sets of luminescent lamps includes an LED light source 911, an optical fiber 912 is arranged at the front end of each LED light source 911, a light filter 913 is arranged at the front end of each optical fiber 912, and a condensing lens 914 is arranged at the front end of each light filter 913, wherein the two luminescent lamps are provided with the light filters with different wavelengths; and the light receiver body 92 includes condensing lenses 921 corresponding to the two luminescent lamps and two light receivers 922 arranged behind the condensing lens. During use, the light transmitter bodies 91 and light receiver bodies 92 are moved according to needs, so that the corresponding luminescent lamps and light receivers correspond to the reaction hole 313, for optical detection of a substance in the reaction hole 313 of the reagent vessel. Compared with the existing optical detection system, the optical detection system 9 has the advantages that the existing halogen lamps are changed to the LED light sources, so that light is emitted stably and is not prone to attenuate, and the calibration period is long; calibration is simple, and takes a short time; the LED light sources are not easy to damage and have a long service life; and heat generation is greatly reduced, and energy is saved. In addition, because of the change and increase of reagent components used in the present invention, the detection originally completed by three optical detection systems 9 can be completed by only one set of optical detection system 9, so that the cost is reduced. Moreover, the light emitted by one light source is originally simultaneously transmitted to the three optical detection systems at different positions through optical fibers, totally six optical channels are needed, the length of each optical fiber is inconsistent, and the channels are long and have difference, so the structure is complex, the stability is poor, and the detection is affected greatly by the environment. The present invention thoroughly solves the above-mentioned problems.

With reference to Fig. 1, the built-in bar code recognizer 10 is arranged on the upper fixed plate 14 and configured to recognize the bar code stuck to the handle of the reagent vessel and transmitting a recognition signal to the control system, so that a detection result is automatically corresponds to the sample information and output.

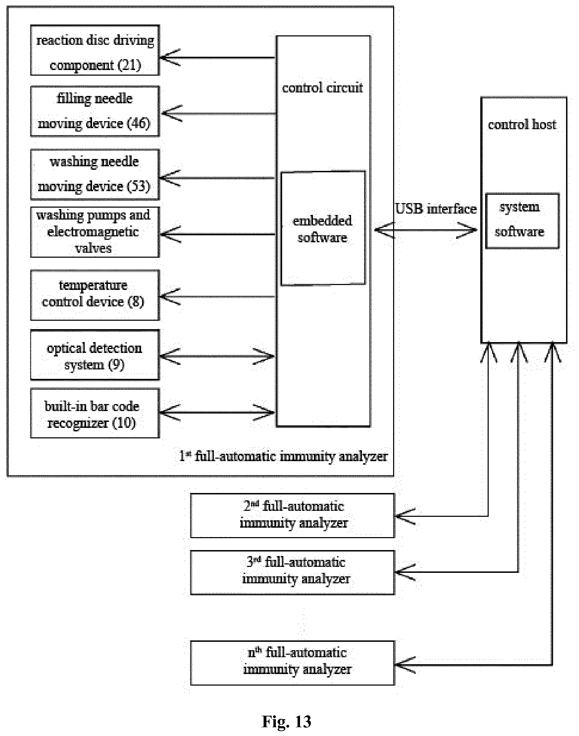

With reference to Fig. 13, the control system includes an instrument control circuit and embedded software written in the instrument control circuit, wherein the instrument control circuit includes a USB interface and is in communication connection with a control host through the USB interface; the reaction disc driving component 22 of the reaction disc component 2, the filling needle moving device 46 of the filling mechanism 4, the washing needle moving device 53 of the washing mechanism, the washing pumps and electromagnetic valves of the liquid path system, the temperature control device 8, the optical detection system 9 and the built-in bar code recognizer 10 are connected with the control host through the instrument control circuit and controlled to operate according to program instructions of the embedded software, and the embedded software simultaneously receives sensing information input of all the components and detection information of the optical detection system 9 and the built-in bar code recognizer 10, and processes data according to programs of the embedded software; and relevant operations such as operation input, display output and printing are executed in the control host through the USB interface.

A method for implementing immune detection by using the above-mentioned full-automatic immunity analyzer includes the following steps:
1, putting a to-be-detected sample into a sample hole of a reagent vessel, an item information bar code corresponding to the sample being stuck to a handle of the reagent vessel;
2, clamping the reagent vessel into a loading trough of a reaction disc component;
3, starting a control system so that the reaction disc component runs, rotating the reagent vessel to a position corresponding to a filling mechanism, adding the sample in the sample hole into a diluting hole by the filling mechanism, adding the diluent in one reagent hole into the diluting hole for dilution, then adding the mixture into a reaction hole, and performing reaction and washing according to preset conditions of the control system, wherein in the washing process, the control system calculates the consumption of the three kinds of working liquid according to the detection signals of three online weighing sensing devices at the bottoms of a cleaning liquid bottle, a washing liquid A bottle and a washing liquid B bottle before and after washing, determines whether the washing process is normal, and gives an alarm for alert if the washing process is not normal; immediately reading an absorbance value by adopting a dynamic method after the last reagent is added, or injecting a stop solution into the reaction hole after the reaction is completed to stop the reaction, and then reading the absorbance value by adopting an end point method;
4, rotating the reagent vessel to a position corresponding to an optical detection system by the reaction disc component when the absorbance value is read, performing optical detection on a substance in the reaction hole by the optical detection system, supplying a detection result to the control system, and processing, storing and outputting the detection result by the control system.

The reagent comprises an antigen or antibody, an enzyme-labeling antigen or antibody, an enzyme chromogenic substrate, a diluent, an adsorption solution or a stop solution for detection, the specific type of the reagent is set according to the requirement of a detection item, and these reagents are collectively accommodated in a specific disposable independent reagent device for an individual.

## Claims

1. A full-automatic immunity analyzer, comprising a main frame component (1), a reaction disc component (2), a filling mechanism (4), washing mechanisms (5, 5'), a liquid storage component (6), a liquid path system (7), a temperature control device (8), an optical detection system (9) and a control system, wherein the main frame component (1) comprises a frame baseplate (11), struts (12) are arranged on the frame baseplate (11), and a lower fixed plate (13) and an upper fixed plate (14) are successively arranged on the struts (12) from bottom to top; the reaction disc component (2) is arranged between the upper fixed plate (14) and the lower fixed plate (13), more than four loading troughs (21) for clamping reagent vessels (3) formed by sample holes, reagent holes, reaction holes with optical path transparency and flat bottoms and diluting holes are formed on the reaction disc component (2) in an annular array manner, and a reaction disc driving component (22) for driving the reaction disc component (2) to rotate is fixedly arranged below the lower fixed plate (13); the filling mechanism (4) is arranged above the upper fixed plate (14) and configured to suck and add samples or reagents among the holes of the reagent vessels (3) placed in the loading troughs (21) of the reaction disc component (2); the filling mechanism (4) comprises an injector device (41), first and second filling needles (42, 43), a filling needle moving device (46), a filling needle cleaning trough (47), first and second puncture needles (44, 45), a filling needle lifting device (4620) and a puncture needle lifting device (4621), wherein the filling needle lifting device (4620) vertically and alternately moves the first and second filling needles (42, 43) and the puncture needle lifting device (4621) vertically and alternately moves the first and second puncture needles (44, 45);
the washing mechanism (5) is arranged above the upper fixed plate (14) and configured to wash the reaction hole (313) of the reagent vessel (3) placed in the loading trough (21) of the reaction disc component; the washing mechanism (5) comprises a liquid adding washing needle (51, 51'), a draining washing needle (52, 52'), a washing needle moving device (53) and a washing needle cleaning trough (54, 54'); the liquid storage component (6) is arranged on the frame baseplate (11), and comprises a cleaning liquid bottle (61) for accommodating a cleaning liquid, a washing liquid bottle (62) for accommodating a washing liquid A and a washing liquid bottle (63) for accommodating a washing liquid B; the liquid path system (7) is connected with the liquid storage component (6), the washing mechanisms (5, 5') and the filling mechanism (4) and configured to deliver the working liquid in the liquid storage component (6) to the washing mechanisms (5, 5') and the filling mechanism (4); the temperature control device (8) is arranged below the reaction disc component (2) and configured to heat the reagent vessels (3) clamped on the reaction disc component (2); the optical detection system (9) comprises a light transmitter body (91) and a light receiver body (92) and is used for optical detection on a substance in the reaction hole (313) of the reagent vessel clamped in the reaction disc loading trough (21), wherein the light transmitter body (91) is arranged above the upper fixed plate (14), and the light receiver body (92) is arranged at a position opposite to the light transmitter body (91) below the reaction disc component (2); the control system comprises an instrument control circuit and embedded software written in the instrument control circuit, and the reaction disc driving component (22) of the reaction disc component (2), the filling needle moving device (46) of the filling mechanism (4), the washing needle moving device (53) of the washing mechanism, washing pumps and electromagnetic valves of the liquid path system, the temperature control device (8), the optical detection system (9) and the instrument control circuit are controlled to operate according to program instructions of the embedded software, wherein the cleaning liquid bottle (61), the washing liquid A bottle (62) and the washing liquid B bottle (63) of the liquid storage component (6) are three independent bottles, and at the bottom of each of the cleaning liquid bottle (61), the washing liquid A bottle (62) and the washing liquid B bottle (63) there is provided an online weighing sensing device (631) for monitoring the weight of the working liquid in the of the bottles (61, 62, 63) and providing signals indicating a usage amount and a remaining amount of working liquid in the bottle to the control system.

2. The full-automatic immunity analyzer of claim 1, wherein the light transmitter body (91) comprises two sets of luminescent lamps arranged side by side, light sources of the two sets of luminescent lamps are LED light sources (911), an optical fiber (912) is arranged at the front end of each LED light source (911), a light filter (913) is arranged at the front end of each optical fiber (912), and a condensing lens (914) is arranged at the front end of each light filter (913), wherein the two luminescent lamps are provided with the light filters (913) with different wavelengths; and the light receiver body (92) comprises condensing lenses (921) corresponding to the two luminescent lamps and two light receivers (922) arranged behind the condensing lenses.

3. The full-automatic immunity analyzer of claim 1, wherein the filling needle moving device (46) comprises a pulley (461), a pulley guide rail (462) fixedly mounted to the upper fixed plate (14) is arranged at the bottom of the pulley (461), and a pulley moving component (463) for driving the pulley (461) to move horizontally along the pulley guide rail (462) is arranged on a side of the pulley guide rail (462), wherein the pulley (461) comprises a pulley support (4611), and a first needle guide rail (4612), a second needle guide rail (4613), a third needle guide rail (4614) and a fourth needle guide rail (4615) are vertically arranged on the front side of the pulley support (4611); the first filling needle (42), the second filling needle (43), the first puncture needle (44) and the second puncture needle (45) are movably clamped on the first needle guide rail (4612), the second needle guide rail (4613), the third needle guide rail (4614) and the fourth needle guide rail (4615) through a first filling needle sliding block (4616), a second filling needle sliding block (4617), a first puncture needle sliding block (4618) and a second puncture needle sliding block (4619) respectively; the filling needle lifting driving device (4620) for vertically and alternately moving the first filling needle (42) and the second filling needle (43) and the puncture needle lifting driving device (4621) for vertically and alternately moving the first puncture needle (44) and the second puncture needle (45) are arranged on the back of the pulley support (4611); the filling needle lifting driving device (4620) comprises a needle moving motor (46201) mounted to the pulley support (4611), a needle moving driving belt wheel is arranged on a shaft of the needle moving motor (46201), a needle moving driven belt wheel (46203) is arranged on the pulley support (4611), a needle moving synchronous belt (46204) is arranged between the needle moving driving belt wheel and the needle moving driven belt wheel (46203), and belt clamps are fixedly connected between one side of the needle moving synchronous belt (46204) and the first filling needle sliding block (4616) and between the other side and the second filling needle sliding block (4617) respectively; the puncture needle lifting driving device (4621) and the filling needle lifting driving device (4620) have the same structure, and belt clamps are fixedly connected between one side of a needle moving synchronous belt (46214) of the puncture needle lifting driving device (4621) and the first puncture needle sliding block (4618) and between the other side and the second puncture needle sliding block (4619) respectively, wherein the pulley moving component (463) comprises a pulley motor (4631) fixedly mounted to the upper fixed plate (14) and a pulley driven belt wheel (4633) arranged on the upper fixed plate (14), a pulley driving belt wheel (4632) is arranged on a shaft of the pulley motor (4631), a pulley synchronous belt (4634) is arranged between the pulley driving belt wheel (4632) and the pulley driven belt wheel (4633), and the pulley synchronous belt (4634) is fixedly connected with the bottom of the pulley support (4611) through the belt clamps.

4. The full-automatic immunity analyzer of claim 1, wherein the washing mechanisms (5, 5') comprise a first washing mechanism (5) and a second washing mechanism (5') with the same structure; each of the two sets of washing mechanisms (5, 5') comprises the liquid adding washing needle (51, 51'), the draining washing needle (52, 52'), the washing needle moving device (53) and the washing needle cleaning trough (54, 54'); the washing needle moving device (53) comprises a washing rack (531) fixedly mounted to the upper fixed plate (14), a washing motor (532) is arranged on the washing rack (531), a driving belt wheel (533) is arranged on a shaft of the washing motor (532), a driven belt wheel (534) is arranged on the washing rack (531), and a synchronous belt (535) is arranged between the driving belt wheel (533) and the driven belt wheel (534); a guide rod (536) is vertically arranged on the washing rack (531), and a washing needle holder (537) for fixing the liquid adding washing needle (51) and the draining washing needle (52) is movably sleeved on the guide rod (536); a guide rail (538) parallel to the guide rod (536) is arranged on the washing rack (531), a sliding block (539) is arranged on the guide rail (538), a belt clamp (5391) fixedly connected with the synchronous belt (535) and driving the sliding block (539) to slide vertically along with running of the synchronous belt (535) is arranged on the sliding block (539), the sliding block (539) is provided with a clamping block (5392) that is raised upwards, and the washing needle holder (537) is provided with a clamping groove (5371) matched with the clamping block (5392), ascending along with the sliding block (539) when the sliding block (539) ascends so as to lift the liquid adding washing needle (51) and the draining washing needle (52), and falling freely along with the washing needle holder (537) by self gravity when the sliding block (539) descends.

5. The full-automatic immunity analyzer of claim 4, wherein the liquid path system comprises a pipeline for pumping the cleaning liquid in the cleaning liquid bottle (61) and the washing liquid in the washing liquid A bottle (62) to the liquid adding washing needle (51) of the first washing component for discharging, an electromagnetic valve (71), a washing pump (72), a pipeline connected with the draining washing needle (52) of the first washing component to drain the liquid to a main waste liquid trough (73), a draining pump (74), a pipeline for draining the waste liquid in the washing needle cleaning trough (54) of the first washing component to the main waste liquid trough (73), a pipeline for pumping the cleaning liquid in the cleaning liquid bottle (61) and the washing liquid in the washing liquid B bottle (63) to the liquid adding washing needle (51') of the second washing component for discharging, an electromagnetic valve (75), a washing pump (76), a pipeline connected with the draining washing needle (52') of the second washing component to drain the liquid to the main waste liquid trough (73), a draining pump (77), a pipeline for draining the waste liquid in the washing needle cleaning trough (54') of the second washing component to the main waste liquid trough (73), a pipeline for pumping the cleaning liquid in the cleaning liquid bottle (61) to clean the injector device (41) and filling needles (42, 43) of the filling mechanism, a washing pump (78), electromagnetic valves (711, 79, 710), and a pipeline for draining the waste liquid in the filling needle washing trough (47) produced by cleaning the filling mechanism to the main waste liquid trough (73).

6. The full-automatic immunity analyzer of claim 1, wherein the temperature control device (8) is a disc-like electric heating plate corresponding to the reaction disc component (2).

7. The full-automatic immunity analyzer of claim 1, wherein the injector device (41) of the filling mechanism (4) is a piston driven device consisting of a step motor and a screw and having a packaged structure.

8. The full-automatic immunity analyzer of claim 1, wherein a built-in bar code recognizer (10) for recognizing an item bar code on a handle of the reagent vessel (3) and transmitting a recognition signal to the control system is arranged on the upper fixed plate (14).

9. The full-automatic immunity analyzer of claim 1, wherein a coder (229) for sensing the rotating angle of a main shaft (221), providing moving information of the reaction disc component (2) to the control system and controlling the running state of a step motor (226) through the control system is arranged at the bottom end of the main shaft (221) and accurately positions the reaction disc component.

10. The full-automatic immunity analyzer of claim 1, wherein the instrument control circuit of the control system comprises a USB interface for communicating with a control host, and 1 to 10 full-automatic immunity analyzers may be controlled by one control host.

11. A method for implementing immune detection by using the full-automatic immunity analyzer of any of claims 1 to 10, comprising the following steps:
1)putting a to-be-detected sample into a sample hole of a reagent vessel, an item information bar code corresponding to the sample being stuck to a handle of the reagent vessel;
2)clamping the reagent vessel into a loading trough of a reaction disc component;
3)starting a control system so that the reaction disc component runs, rotating the reagent vessel to a position corresponding to a filling mechanism, adding the sample in the sample hole into a diluting hole by the filling mechanism, adding the diluent in one reagent hole into the diluting hole for dilution, then adding the mixture into a reaction hole, and performing reaction and washing according to preset conditions of the control system, wherein in the washing process, the control system calculates the consumption of the three kinds of working liquid according to the detection signals of three online weighing sensing devices at the bottoms of a cleaning liquid bottle, a washing liquid A bottle and a washing liquid B bottle before and after washing, determines whether the washing process is normal, and gives an alarm for alert if the washing process is not normal; immediately reading an absorbance value by adopting a dynamic method after the last reagent is added, or injecting a stop solution into the reaction hole after the reaction is completed to stop the reaction, and then reading the absorbance value by adopting an end point method; and
4)rotating the reagent vessel to a position corresponding to an optical detection system by the reaction disc component when the absorbance value is read, performing optical detection on a substance in the reaction hole by the optical detection system, supplying a detection result to the control system, and processing, storing and outputting the detection result by the control system.

12. The immune detection method of claim 11, wherein the reagent comprises an antigen or antibody, an enzyme-labeling antigen or antibody, an enzyme chromogenic substrate, a diluent, an adsorption solution or a stop solution for detection, the specific type of the reagent is set according to the requirement of a detection item, and these reagents are collectively accommodated in a specific disposable independent reagent device for an individual.

## Patentansprüche

1. Vollautomatischer Immunitätsanalysator, umfassend einen Hauptrahmenteil (1), einen Reaktionsscheibenteil (2), einen Füllmechanismus (4), Spülmechanismen (5, 5'), einen Flüssigkeitsspeicherteil (6), ein Flüssigkeitspfadsystem (7), eine Temperaturregelvorrichtung (8), ein optisches Detektionssystem (9) und ein Steuersystem, wobei der Hauptrahmenteil (1) eine Rahmenbasisplatte (11) umfasst, Streben (12) an der Rahmenbasisplatte (11) angeordnet sind, und eine untere feststehende Platte (13) und eine obere feststehende Platte (14) an den Streben (12) von unten nach oben nacheinander angeordnet sind; der Reaktionsscheibenteil (2) zwischen der oberen feststehenden Platte (14) und der unteren feststehenden Platte (13) angeordnet ist, mehr als vier Lademulden (21) zum Einsetzen von Reagenzgefäßen (3), die durch Probenlöcher, Reagenzlöcher, Reaktionslöcher mit Lichtwegtransparenz und flache Böden gebildet sind, und Verdünnungslöcher an dem Reaktionsscheibenteil (2) nach Art einer ringförmigen Aufstellung gebildet sind, und ein Teil (22) zum Antreiben einer Reaktionsscheibe, um den Reaktionsscheibenteil (2) anzutreiben, damit er sich dreht, unterhalb der unteren feststehenden Platte (13) fest angeordnet ist; der Füllmechanismus (4) oberhalb der oberen feststehenden Platte (14) angeordnet ist und konfiguriert ist, um Proben oder Reagenzien aus den Löchern der Reagenzgefäße (3), die in den Lademulden (21) des Reaktionsscheibenteils (2) angeordnet sind, anzusaugen und hinzuzufügen; der Füllmechanismus (4) eine Injektionsvorrichtung (41), erste und zweite Füllnadeln (42, 43), eine Vorrichtung (46) zum Bewegen von Füllnadeln, eine Mulde (47) zum Reinigen von Füllnadeln, erste und zweite Einstechnadeln (44, 45), eine Vorrichtung (4620) zum Anheben von Füllnadeln und eine Vorrichtung (4621) zum Anheben von Einstechnadeln umfasst, wobei die Vorrichtung (4620) zum Anheben von Füllnadeln die ersten und zweiten Füllnadeln (42, 43) senkrecht und abwechselnd bewegt, und die Vorrichtung (4621) zum Anheben von Einstechnadeln die ersten und zweiten Einstechnadeln (44, 45) senkrecht und abwechselnd bewegt;
der Spülmechanismus (5) oberhalb der oberen feststehenden Platte (14) angeordnet ist und konfiguriert ist, um das Reaktionsloch (313) des Reagenzgefäßes (3), das in der Lademulde (21) des Reaktionsscheibenteils angeordnet ist, zu spülen; der Spülmechanismus (5) eine Spülnadel (51, 51') zum Hinzufügen von Flüssigkeit, eine Ablaufspülnadel (52, 52'), eine Vorrichtung (53) zum Bewegen von Spülnadeln und eine Spülnadelreinigungsmulde (54, 54') umfasst; der Flüssigkeitsspeicherteil (6) auf der Rahmenbasisplatte (11) angeordnet ist und eine Flasche (61) mit Reinigungsflüssigkeit zum Aufnehmen einer Reinigungsflüssigkeit A, eine Flasche (61) mit Spülflüssigkeit zum Aufnehmen einer Spülflüssigkeit A und eine Flasche (63) mit Spülflüssigkeit zum Aufnehmen einer Spülflüssigkeit B umfasst; das Flüssigkeitspfadsystem (7) mit dem Flüssigkeitsspeicherteil (6), den Spülmechanismen (5, 5') und dem Füllmechanismus (4) verbunden ist und konfiguriert ist, um die Arbeitsflüssigkeit in dem Flüssigkeitsspeicherteil (6) an die Spülmechanismen (5, 5') und den Füllmechanismus (4) abzugeben; die Temperaturregelvorrichtung (8) unterhalb des Reaktionsscheibenteils (2) angeordnet ist und konfiguriert ist, um die Reagenzgefäße (3) zu erhitzen, die auf dem Reaktionsscheibenteil (2) eingesetzt sind; das optische Detektionssystem (9) einen Lichtsendekörper (91) und einen Lichtempfangskörper (92) umfasst und zur optischen Detektion an einer Substanz in dem Reaktionsloch (313) des Reagenzgefäßes, das in der Lademulde (21) der Reaktionsscheibe eingesetzt ist, verwendet wird, wobei der Lichtsendekörper (91) oberhalb der oberen feststehenden Platte (14) angeordnet ist, und der Lichtempfangskörper (92) in einer Position gegenüber dem Lichtsendekörper (91) unterhalb des Reaktionsscheibenteils (2) angeordnet ist; das Steuersystem eine Instrumentensteuerschaltung und eingebettete Software, die in die Instrumentensteuerschaltung geschrieben ist, umfasst, und der Teil (22) zum Antreiben einer Reaktionsscheibe des Reaktionsscheibenteils (2), die Vorrichtung (46) zum Bewegen von Füllnadeln des Füllmechanismus (4), die Vorrichtung (53) zum Bewegen von Spülnadeln des Spülmechanismus, Spülpumpen und elektromagnetische Ventile des Flüssigkeitspfadsystems, die Temperaturregelvorrichtung (8), das optische Detektionssystem (9) und die Instrumentensteuerschaltung gesteuert werden, um gemäß den Programmanweisungen der eingebetteten Software zu funktionieren, wobei die Flasche (61) mit Reinigungsflüssigkeit, die Flasche (62) mit einer Spülflüssigkeit A und die Flasche (63) mit einer Spülflüssigkeit B des Flüssigkeitsspeicherteils (6) drei unabhängige Flaschen sind, und auf dem Boden jeder von der Flasche (61) mit Reinigungsflüssigkeit, der Flasche (62) mit einer Spülflüssigkeit A und der Flasche (63) mit einer Spülflüssigkeit B eine rechnerabhängige Gewichtssensorvorrichtung (631) bereitgestellt wird, um das Gewicht der Arbeitsflüssigkeit in den Flaschen (61, 62, 63) zu überwachen und Signale bereitzustellen, die dem Steuersystem eine Gebrauchsmenge und eine Restmenge der Arbeitsflüssigkeit in der Flasche angeben.

2. Vollautomatischer Immunitätsanalysator nach Anspruch 1, wobei der Lichtsendekörper (91) zwei Gruppen von Leuchtstofflampen, die nebeneinander angeordnet sind, umfasst, die Lichtquellen der beiden Gruppen von Leuchtstofflampen LED-Lichtquellen (911) sind, eine Lichtleitfaser (912) am vorderen Ende jeder LED-Lichtquelle (911) angeordnet ist, ein Lichtfilter (913) am vorderen Ende jeder Lichtleitfaser (912) angeordnet ist, und ein Kondensor (914) an dem vorderen Ende jeder Lichtfilter (913) angeordnet ist, wobei die beiden Leuchtstofflampen mit den Lichtfiltern (913) mit unterschiedlichen Wellenlängen versehen sind; und der Lichtempfangskörper (92) Kondensoren (921), die den beiden Leuchtstofflampen entsprechen, und zwei Lichtempfänger (922), die hinter den Kondensoren angeordnet sind, umfasst.

3. Vollautomatischer Immunitätsanalysator nach Anspruch 1, wobei die Vorrichtung (46) zum Bewegen von Füllnadeln eine Riemenscheibe (461) umfasst, eine Riemenscheibenführungsschiene (462), die an der oberen feststehenden Platte (14) fest montiert ist, unten an der Riemenscheibe (461) angeordnet ist, und ein Riemenscheibenbewegungsteil (463) zum Antreiben der Riemenscheibe (461), damit sie sich waagerecht entlang Riemenscheibenführungsschiene (462) bewegt, auf einer Seite der Riemenscheibenführungsschiene (462) angeordnet ist,
wobei die Riemenscheibe (461) einen Riemenscheibenträger (4611) umfasst, und eine erste Nadelführungsschiene (4612), ein zweite Nadelführungsschiene (4613), eine dritte Nadelführungsschiene (4614) und eine vierte Nadelführungsschiene (4615) auf der Vorderseite des Riemenscheibenträgers (4611) senkrecht angeordnet sind; die erste Füllnadel (42), die zweite Füllnadel (43), die erste Einstechnadel (44) und die zweite Einstechnadel (45) auf der ersten Nadelführungsschiene (4612), der zweiten Nadelführungsschiene (4613), der dritten Nadelführungsschiene (4614) und der vierten Nadelführungsschiene (4615) jeweils über einen ersten Füllnadelgleitblock (4616), einen zweiten Füllnadelgleitblock (4617), einen ersten Einstechnadelgleitblock (4618) und einen zweiten Einstechnadelgleitblock (4619) bewegbar eingesetzt sind; die Antriebsvorrichtung (4620) zum Anheben von Füllnadeln, um die erste Füllnadel (42) und die zweite Füllnadel (43) senkrecht und abwechselnd zu bewegen, und die Antriebsvorrichtung (4621) zum Anheben von Einstechnadeln, um die erste Einstechnadel (44) und die zweite Einstechnadel (45) senkrecht und abwechselnd zu bewegen, auf der Rückseite des Riemenscheibenträgers (4611) angeordnet sind; die Antriebsvorrichtung (4620) zum Anheben von Füllnadeln einen Nadelbewegungsmotor (46201) umfasst, der an dem Riemenscheibenträger (4611) montiert ist, ein Antriebsriemenrad zum Bewegen von Nadeln an einer Welle des Nadelbewegungsmotors (46201) angeordnet ist, ein angetriebenes Riemenrad (46203) zum Bewegen von Nadeln an dem Riemenscheibenträger (4611) angeordnet ist, ein Zahnriemen (46204) zum Bewegen von Nadeln zwischen dem Antriebsriemenrad zum Bewegen von Nadeln und dem angetriebenen Riemenrad (46203) zum Bewegen von Nadeln angeordnet ist, und Riemenklemmen jeweils zwischen einer Seite des Zahnriemens (46204) zum Bewegen von Nadeln und dem ersten Füllnadelgleitblock (4616) und zwischen der anderen Seite und dem zweiten Füllnadelgleitblock (4617) fest verbunden sind; die Antriebsvorrichtung (4621) zum Anheben von Einstechnadeln und die Antriebsvorrichtung (4620) zum Anheben von Füllnadeln den gleichen Aufbau aufweisen, und Riemenklemmen jeweils zwischen einer Seite eines Zahnriemens (46214) zum Bewegen von Nadeln der Antriebsvorrichtung (4621) zum Anheben von Einstechnadeln und dem ersten Einstechnadelgleitblock (4618) und zwischen der anderen Seite und dem zweiten Einstechnadelgleitblock (4619) fest verbunden sind, wobei der Riemenscheibenbewegungsteil (463) einen Riemenscheibenmotor (4631), der an der oberen feststehenden Platte (14) fest montiert ist, und ein angetriebenes Riemenrad (4633) einer Riemenscheibe, das auf der oberen feststehenden Platte (14) angeordnet ist, umfasst, ein Antriebsriemenrad (4632) einer Riemenscheibe an einer Welle des Riemenscheibenmotors (4631) angeordnet ist, ein Riemenscheibenzahnriemen (4634) zwischen dem Antriebsriemenrad (4632) einer Riemenscheibe und dem angetriebenen Riemenrad (4633) einer Riemenscheibe angeordnet ist, und der Riemenscheibenzahnriemen (4634) mit dem unteren Teil des Riemenscheibenträgers (4611) über die Riemenklemmen fest verbunden ist.

4. Vollautomatischer Immunitätsanalysator nach Anspruch 1, wobei die Spülmechanismen (5, 5') einen ersten Spülmechanismus (5) und einen zweiten Spülmechanismus (5') mit dem gleichen Aufbau umfassen; jede der beiden Gruppen von Spülmechanismen (5, 5') die Spülnadel (51, 51') zum Hinzufügen von Flüssigkeit, die Ablaufspülnadel (52, 52'), die Vorrichtung (53) zum Bewegen von Spülnadeln und die Spülnadelreinigungsmulde (54, 54') umfasst; die Vorrichtung (53) zum Bewegen von Spülnadeln ein Spülgestell (531), das an der oberen feststehenden Platte (14) fest montiert ist, umfasst, ein Spülmotor (532) an dem Spülgestell (531) angeordnet ist, ein Antriebsriemenrad (533) an einer Welle des Spülmotors (532) angeordnet ist, ein angetriebenes Riemenrad (534) an dem Spülgestell (531) angeordnet ist, und ein Zahnriemen (535) zwischen dem Antriebsriemenrad (533) und dem angetriebenen Riemenrad (534) angeordnet ist; ein Führungsstab (536) an dem Spülgestell (531) senkrecht angeordnet ist, und ein Spülnadelhalter (537) zum Befestigen der Spülnadel (51) zum Hinzufügen von Flüssigkeit und der Ablaufspülnadel (52) auf den Führungsstab (536) bewegbar aufgeschoben ist; eine Führungsschiene (538) parallel zu dem Führungsstab (536) an dem Spülgestell (531) angeordnet ist, ein Gleitblock (539) an der Führungsschiene (538) angeordnet ist, eine Riemenklemme (5391), die mit dem Zahnriemen (535) fest verbunden ist und den Gleitblock (539) antreibt, damit er senkrecht zusammen mit dem Verlauf des Zahnriemens (535) gleitet, an dem Gleitblock (539) angeordnet ist, der Gleitblock (539) mit einem Klemmblock (5392), der nach oben angehoben ist, versehen ist, und der Spülnadelhalter (537) mit einer Klemmrille (5371), die zu dem Klemmblock (5392) passt, versehen ist, die zusammen mit dem Gleitblock (539) ansteigt, wenn der Gleitblock (539) ansteigt, um die Spülnadel (51) zum Hinzufügen von Flüssigkeit und die Ablaufspülnadel (52) anzuheben, und zusammen mit dem Spülnadelhalter (537) durch Eigenschwerkraft frei fällt, wenn der Gleitblock (539) absteigt.

5. Vollautomatischer Immunitätsanalysator nach Anspruch 4, wobei das Flüssigkeitspfadsystem eine Leitung zum Pumpen der Reinigungsflüssigkeit in der Flasche (61) mit Reinigungsflüssigkeit und der Spülflüssigkeit in der Flasche (62) mit einer Spülflüssigkeit A zu der Spülnadel (51) zum Hinzufügen von Flüssigkeit des ersten Spülteils zum Ablassen, ein elektromagnetisches Ventil (71), eine Spülpumpe (72), eine Leitung, die mit der Ablaufspülnadel (52) des ersten Spülteils verbunden ist, um die Flüssigkeit in eine Hauptmulde für Flüssigkeitsabfall (73) ablaufen zu lassen, eine Ablaufpumpe (74), eine Leitung zum Ablaufenlassen des Flüssigkeitsabfalls in die Spülnadelreinigungsmulde (54) des ersten Spülteils in die Hauptmulde für Flüssigkeitsabfall (73), eine Leitung zum Pumpen der Reinigungsflüssigkeit in der Flasche (61) mit Reinigungsflüssigkeit und der Spülflüssigkeit in der Flasche (63) mit einer Spülflüssigkeit B zu der Spülnadel (51') Hinzufügen von Flüssigkeit des zweiten Spülteils zum Ablassen, ein elektromagnetisches Ventil (75), eine Spülpumpe (76), eine Leitung, die mit der Ablaufspülnadel (52') des zweiten Spülteils verbunden ist, um die Flüssigkeit in die Hauptmulde für Flüssigkeitsabfall (73) ablaufen zu lassen, eine Ablaufpumpe (77), eine Leitung zum Ablaufenlassen des Flüssigkeitsabfalls in der Spülnadelreinigungsmulde (54') des zweiten Spülteils in die Hauptmulde für Flüssigkeitsabfall (73), eine Leitung zum Pumpen der Reinigungsflüssigkeit in der Flasche (61) mit Reinigungsflüssigkeit, um die Injektionsvorrichtung (41) und die Füllnadeln (42, 43) des Füllmechanismus zu reinigen, eine Spülpumpe (78), elektromagnetische Ventile (711, 79, 710), und eine Leitung zum Ablaufenlassen des Flüssigkeitsabfalls in der Spülmulde (47) der Füllnadel, der durch das Reinigen des Füllmechanismus erzeugt wird, in die Hauptmulde für Flüssigkeitsabfall (73) umfasst.

6. Vollautomatischer Immunitätsanalysator nach Anspruch 1, wobei die Temperaturregelvorrichtung (8) eine scheibenartige elektrische Heizplatte ist, die dem Reaktionsscheibenteil (2) entspricht.

7. Vollautomatischer Immunitätsanalysator nach Anspruch 1, wobei die Injektionsvorrichtung (41) des Füllmechanismus (4) eine Vorrichtung mit Kolbenantrieb ist, die aus einem Schrittmotor und einer Spindel besteht und einen kompakten Aufbau aufweist.

8. Vollautomatischer Immunitätsanalysator nach Anspruch 1, wobei eine eingebaute Vorrichtung (10) zum Erkennen von Strichcodes, um einen Artikelstrichcode an einem Griff des Reagenzgefäßes (3) zu erkennen und ein Erkennungssignal an das Steuersystem zu senden, auf der oberen feststehenden Platte (14) angeordnet ist.

9. Vollautomatischer Immunitätsanalysator nach Anspruch 1, wobei ein Codierer (229) zum Erfassen des Drehwinkels einer Hauptwelle (221), der dem Steuersystem Bewegungsinformationen des Reaktionsscheibenteils (2) bereitstellt und den Betriebszustand eines Schrittmotors (226) über das Steuersystem steuert, an dem unteren Ende der Hauptwelle (221) angeordnet ist und das Reaktionsscheibenteil genau positioniert.

10. Vollautomatischer Immunitätsanalysator nach Anspruch 1, wobei die Instrumentensteuerschaltung des Steuersystems eine USB-Schnittstelle zur Kommunikation mit einem Steuerungs-Host umfasst, und 1 bis 10 vollautomatische Immunitätsanalysatoren durch einen einzigen Steuerungs-Host gesteuert werden können.

11. Verfahren zum Umsetzen einer Immunitätsdetektion unter Verwendung des vollautomatischen Immunitätsanalysators nach einem der Ansprüche 1 bis 10, umfassend folgende Schritte:
1) Geben einer zu detektierenden Probe in ein Probenloch eines Reagenzgefäßes, wobei ein Strichcode mit Artikelinformationen, die der Probe entsprechen, auf einen Griff des Reagenzgefäßes geklebt ist;
2) Einsetzen des Reagenzgefäßes in eine Lademulde eines Reaktionsscheibenteils;
3) Starten eines Steuersystems, so dass der Reaktionsscheibenteil läuft, Drehen des Reagenzgefäßes in eine Position, die einem Füllmechanismus entspricht, Hinzufügen der Probe in dem Probenloch in ein Verdünnungsloch durch den Füllmechanismus, Hinzufügen des Verdünners in einem Reagenzloch in das Verdünnungsloch zur Verdünnung, dann Hinzufügen der Mischung in ein Reaktionsloch und Ausführen einer Reaktion und Spülung gemäß voreingestellten Bedingungen des Steuersystems, wobei das Steuersystem bei dem Waschprozess den Verbrauch der drei Arten von Arbeitsflüssigkeit gemäß den Detektionssignalen von drei rechnerabhängigen Gewichtssensorvorrichtungen auf den Böden einer Reinigungsflüssigkeitsflasche, einer Flasche mit einer Spülflüssigkeit A und einer Flasche mit einer Spülflüssigkeit B vor und nach dem Spülen berechnet und bestimmt, ob der Spülprozess normal ist, und einen Alarm erteilt, um zu melden, falls der Spülprozess nicht normal ist; sofortiges Lesen eines Extinktionswertes durch Übernehmen eines dynamischen Verfahrens, nachdem das letzte Reagens hinzugefügt wurde, oder Injizieren einer Stopplösung in das Reaktionsloch, nachdem die Reaktion beendet ist, um die Reaktion zu stoppen, und dann Lesen des Extinktionswertes durch Übernehmen eines Endpunktverfahrens; und
4) Drehen des Reagenzgefäßes in eine Position, die einem optischen Detektionssystem entspricht, durch den Reaktionsscheibenteil, wenn der Extinktionswert gelesen wird, Ausführen einer optischen Detektion an einer Substanz in dem Reaktionsloch durch das optische Detektionssystem, Zuführen eines Detektionsergebnisses zu dem Steuersystem und Verarbeiten, Speichern und Ausgeben des Detektionsergebnisses durch das Steuersystem.

12. Immunitätsdetektionsverfahren nach Anspruch 11, wobei das Reagenz ein Antigen bzw. einen Antikörper, ein enzymmarkierendes Antigen bzw. einen Antikörper, ein chromogenes Enzymsubstrat, einen Verdünner, eine Adsorptionslösung oder eine Stopplösung zur Detektion umfasst, der spezifische Typ des Reagens gemäß der Anforderung eines Detektionselements eingestellt wird, und diese Reagenzien insgesamt in einer spezifischen wegwerfbaren unabhängigen Reagensvorrichtung für eine Person aufgenommen sind.

## Revendications

1. Analyseur d'immunité entièrement automatique, comprenant un composant cadre principal (1), un composant disque de réaction (2), un mécanisme de remplissage (4), des mécanismes de lavage (5, 5'), un composant de stockage de liquide (6), un système de trajet de liquide (7), un dispositif de régulation de température (8), un système de détection optique (9) et un système de commande, le composant cadre principal (1) comprenant une plaque de base de cadre (11), des entretoises (12) étant agencées sur la plaque de base de cadre (11), et une plaque fixe inférieure (13) et une plaque fixe supérieure (14) étant successivement agencées sur les entretoises (12) de bas en haut ; le composant disque de réaction (2) étant agencé entre la plaque fixe supérieure (14) et la plaque fixe inférieure (13), plus de quatre creux de chargement (21) pour serrer des récipients de réactif (3) formés par des trous d'échantillon, des trous de réactif, des trous de réaction avec une transparence de trajet optique et des fonds plats et des trous de dilution étant formés sur le composant disque de réaction (2) suivant un réseau annulaire, et un composant d'entraînement de disque de réaction (22), pour entraîner le composant disque de réaction (2) en rotation, étant agencé de manière fixe au-dessous de la plaque fixe inférieure (13) ; le mécanisme de remplissage (4) étant agencé au-dessus de la plaque fixe supérieure (14) et configuré pour aspirer et ajouter des échantillons ou des réactifs parmi les trous des récipients de réactif (3) placés dans les creux de chargement (21) du composant disque de réaction (2) ; le mécanisme de remplissage (4) comprenant un dispositif injecteur (41), des première et seconde aiguilles de remplissage (42, 43), un dispositif de déplacement d'aiguille de remplissage (46), un creux de nettoyage d'aiguille de remplissage (47), des première et seconde aiguilles de ponction (44, 45), un dispositif de levage d'aiguille de remplissage (4620) et un dispositif de levage d'aiguille de ponction (4621), le dispositif de levage d'aiguille de remplissage (4620) déplaçant de manière verticale et alternée les première et seconde aiguilles de remplissage (42, 43) et le dispositif de levage d'aiguille de ponction (4621) déplaçant de manière verticale et alternée les première et seconde aiguilles de ponction (44, 45) ;
le mécanisme de lavage (5) étant agencé au-dessus de la plaque fixe supérieure (14) et configuré pour laver le trou de réaction (313) du récipient de réactif (3) placé dans le creux de chargement (21) du composant disque de réaction ; le mécanisme de lavage (5) comprenant une aiguille de lavage d'ajout de liquide (51, 51'), une aiguille de lavage de drainage (52, 52'), un dispositif de déplacement d'aiguille de lavage (53) et un creux de nettoyage d'aiguille de lavage (54, 54') ; le composant de stockage de liquide (6) étant agencé sur la plaque de base de cadre (11), et comprenant une bouteille de liquide de nettoyage (61) pour recevoir un liquide de nettoyage, une bouteille de liquide de lavage (62) pour recevoir un liquide de lavage A et une bouteille de liquide de lavage (63) pour recevoir un liquide de lavage B ; le système de trajet de liquide (7) étant relié au composant de stockage de liquide (6), aux mécanismes de lavage (5, 5') et au mécanisme de remplissage (4) et configuré pour distribuer le liquide de travail dans le composant de stockage de liquide (6) aux mécanismes de lavage (5, 5') et au mécanisme de remplissage (4) ; le dispositif de régulation de température (8) étant agencé au-dessous du composant disque de réaction (2) et configuré pour chauffer les récipients de réactif (3) serrés sur le composant disque de réaction (2) ; le système de détection optique (9) comprenant un corps émetteur de lumière (91) et un corps récepteur de lumière (92) et étant utilisé pour une détection optique sur une substance dans le trou de réaction (313) du récipient de réactif serré dans le creux de chargement de disque de réaction (21), le corps émetteur de lumière (91) étant agencé au-dessus de la plaque fixe supérieure (14), et le corps récepteur de lumière (92) étant agencé à une position opposée au corps émetteur de lumière (91) au-dessous du composant disque de réaction (2) ; le système de commande comprenant un circuit de commande d'instrument et un logiciel intégré écrit dans le circuit de commande d'instrument, et le composant d'entraînement de disque de réaction (22) du composant disque de réaction (2), le dispositif de déplacement d'aiguille de remplissage (46) du mécanisme de remplissage (4), le dispositif de déplacement d'aiguille de lavage (53) du mécanisme de lavage, des pompes de lavage et des vannes électromagnétiques du système de trajet de liquide, le dispositif de régulation de température (8), le système de détection optique (9) et le circuit de commande d'instrument étant commandés pour fonctionner selon des instructions de programme du logiciel intégré, la bouteille de liquide de nettoyage (61), la bouteille de liquide de lavage A (62) et la bouteille de liquide de lavage B (63) du composant de stockage de liquide (6) étant trois bouteilles indépendantes et, au fond de chacune de la bouteille de liquide de nettoyage (61), de la bouteille de liquide de lavage A (62) et de la bouteille de liquide de lavage B (63), se trouve un dispositif de détection de pesée en ligne (631) pour surveiller le poids du liquide de travail dans les bouteilles (61, 62, 63) et fournir des signaux indiquant une quantité d'utilisation et une quantité restante de liquide de travail dans la bouteille au système de commande.

2. Analyseur d'immunité entièrement automatique selon la revendication 1, dans lequel le corps émetteur de lumière (91) comprend deux ensembles de lampes luminescentes agencées côte à côte, des sources de lumière des deux ensembles de lampes luminescentes sont des sources de lumière à DEL (911), une fibre optique (912) est agencée à l'extrémité avant de chaque source de lumière à DEL (911), un filtre de lumière (913) est agencé à l'extrémité avant de chaque fibre optique (912), et une lentille de condensation (914) est agencée à l'extrémité avant de chaque filtre de lumière (913), les deux lampes luminescentes comportant les filtres de lumière (913) avec différentes longueurs d'onde ; et le corps récepteur de lumière (92) comprend des lentilles de condensation (921) correspondant aux deux lampes luminescentes et deux récepteurs de lumière (922) agencés derrière les lentilles de condensation.

3. Analyseur d'immunité entièrement automatique selon la revendication 1, dans lequel le dispositif de déplacement d'aiguille de remplissage (46) comprend une poulie (461), un rail de guidage de poulie (462) monté de manière fixe sur la plaque fixe supérieure (14) est agencé à la partie inférieure de la poulie (461), et un composant de déplacement de poulie (463) pour entraîner la poulie (461) en déplacement horizontal le long du rail de guidage de poulie (462) est agencé sur un côté du rail de guidage de poulie (462), la poulie (461) comprenant un support de poulie (4611), et un premier rail de guidage d'aiguille (4612), un deuxième rail de guidage d'aiguille (4613), un troisième rail de guidage d'aiguille (4614) et un quatrième rail de guidage d'aiguille (4615) étant agencés verticalement sur le côté avant du support de poulie (4611) ; la première aiguille de remplissage (42), la seconde aiguille de remplissage (43), la première aiguille de ponction (44) et la seconde aiguille de ponction (45) étant serrées de manière mobile sur le premier rail de guidage d'aiguille (4612), le deuxième rail de guidage d'aiguille (4613), le troisième rail de guidage d'aiguille (4614) et le quatrième rail de guidage d'aiguille (4615) par l'intermédiaire d'un bloc de coulissement de première aiguille de remplissage (4616), d'un bloc de coulissement de seconde aiguille de remplissage (4617), d'un bloc de coulissement de première aiguille de ponction (4618) et d'un bloc de coulissement de seconde aiguille de ponction (4619), respectivement ; le dispositif d'entraînement de levage d'aiguille de remplissage (4620) pour déplacer de manière verticale et alternée la première aiguille de remplissage (42) et la seconde aiguille de remplissage (43) et le dispositif d'entraînement de levage d'aiguille de ponction (4621) pour déplacer de manière verticale et alternée la première aiguille de ponction (44) et la seconde aiguille de ponction (45) étant agencés à l'arrière du support de poulie (4611) ; le dispositif d'entraînement de levage d'aiguille de remplissage (4620) comprenant un moteur de déplacement d'aiguille (46201) monté sur le support de poulie (4611), une roue à courroie d'entraînement de mouvement d'aiguille étant agencée sur un arbre du moteur de déplacement d'aiguille (46201), une roue à courroie entraînée de déplacement d'aiguille (46203) étant agencée sur le support de poulie (4611), une courroie synchrone de déplacement d'aiguille (46204) étant agencée entre la roue à courroie d'entraînement de mouvement d'aiguille et la roue à courroie entraînée de mouvement d'aiguille (46203), et des pinces de courroie étant reliées de manière fixe entre un côté de la courroie synchrone de mouvement d'aiguille (46204) et le bloc de coulissement de première aiguille de remplissage (4616) et entre l'autre côté et le bloc de coulissement de seconde aiguille de remplissage (4617), respectivement ; le dispositif d'entraînement de levage d'aiguille de ponction (4621) et le dispositif d'entraînement de levage d'aiguille de remplissage (4620) ayant la même structure, et des pinces de courroie étant reliées de manière fixe entre un côté d'une courroie synchrone de mouvement d'aiguille (46214) du dispositif d'entraînement de levage d'aiguille de ponction (4621) et le bloc de coulissement de première aiguille de ponction (4618) et entre l'autre côté et le bloc de coulissement de seconde aiguille de ponction (4619), respectivement, le composant de déplacement de poulie (463) comprenant un moteur de poulie (4631) monté de manière fixe sur la plaque fixe supérieure (14) et une roue à courroie entraînée de poulie (4633) agencée sur la plaque fixe supérieure (14), une roue à courroie d'entraînement de poulie (4632) étant agencée sur un arbre du moteur de poulie (4631), une courroie synchrone de poulie (4634) étant agencée entre la roue à courroie d'entraînement de poulie (4632) et la roue à courroie entraînée de poulie (4633), et la courroie synchrone de poulie (4634) étant reliée de manière fixe à la partie inférieure du support de poulie (4611) par l'intermédiaire des pinces de courroie.

4. Analyseur d'immunité entièrement automatique selon la revendication 1, dans lequel les mécanismes de lavage (5, 5') comprennent un premier mécanisme de lavage (5) et un second mécanisme de lavage (5') avec la même structure ; chacun des deux ensembles de mécanismes de lavage (5, 5') comprend l'aiguille de lavage d'ajout de liquide (51, 51'), l'aiguille de lavage de drainage (52, 52'), le dispositif de déplacement d'aiguille de lavage (53) et le creux de nettoyage d'aiguille de lavage (54, 54') ; le dispositif de déplacement d'aiguille de lavage (53) comprend un support de lavage (531) monté de manière fixe sur la plaque fixe supérieure (14), un moteur de lavage (532) est agencé sur le support de lavage (531), une roue à courroie d'entraînement (533) est agencée sur un arbre du moteur de lavage (532), une roue à courroie entraînée (534) est agencée sur le support de lavage (531), et une courroie synchrone (535) est agencée entre la roue à courroie d'entraînement (533) et la roue à courroie entraînée (534) ; une tige de guidage (536) est agencée verticalement sur le support de lavage (531), et un porte-aiguille de lavage (537) pour fixer l'aiguille de lavage d'ajout de liquide (51) et l'aiguille de lavage de drainage (52) est emmanché de manière mobile sur la tige de guidage (536) ; un rail de guidage (538) parallèle à la tige de guidage (536) est agencé sur le support de lavage (531), un bloc coulissant (539) est agencé sur le rail de guidage (538), une pince de courroie (5391), reliée de manière fixe à la courroie synchrone (535) et entraînant le bloc coulissant (539) en coulissement vertical conjointement avec le déplacement de la courroie synchrone (535), est agencée sur le bloc coulissant (539), le bloc coulissant (539) comporte un bloc de serrage (5392) qui est élevé vers le haut, et le porte-aiguille de lavage (537) comporte une rainure de serrage (5371) mise en correspondance avec le bloc de serrage (5392), s'élevant conjointement avec le bloc coulissant (539) lorsque le bloc coulissant (539) s'élève de façon à lever l'aiguille de lavage d'ajout de liquide (51) et l'aiguille de lavage de drainage (52), et tombant librement conjointement avec le porte-aiguille de lavage (537) par gravité lorsque le bloc coulissant (539) descend.

5. Analyseur d'immunité entièrement automatique selon la revendication 4, dans lequel le système de trajet de liquide comprend une conduite pour pomper le liquide de nettoyage dans la bouteille de liquide de nettoyage (61) et le liquide de lavage dans la bouteille de liquide de lavage A (62) jusqu'à l'aiguille de lavage d'ajout de liquide (51) du premier composant de lavage en vue d'une décharge, une vanne électromagnétique (71), une pompe de lavage (72), une conduite reliée à l'aiguille de lavage de drainage (52) du premier composant de lavage pour drainer le liquide jusqu'à un creux de liquide résiduel principal (73), une pompe de drainage (74), une conduite pour drainer le liquide résiduel dans le creux de nettoyage d'aiguille de lavage (54) du premier composant de lavage jusqu'au creux de liquide résiduel principal (73), une conduite pour pomper le liquide de nettoyage dans la bouteille de liquide de nettoyage (61) et le liquide de lavage dans la bouteille de liquide de lavage B (63) jusqu'à l'aiguille de lavage d'ajout de liquide (51') du second composant de lavage en vue d'une décharge, une vanne électromagnétique (75), une pompe de lavage (76), une conduite reliée à l'aiguille de lavage de drainage (52') du second composant de lavage pour drainer le liquide jusqu'au creux de liquide résiduel principal (73), une pompe de drainage (77), une conduite pour drainer le liquide résiduel dans le creux de nettoyage d'aiguille de lavage (54') du second composant de lavage jusqu'au creux de liquide résiduel principal (73), une conduite pour pomper le liquide de nettoyage dans la bouteille de liquide de nettoyage (61) pour nettoyer le dispositif injecteur (41) et les aiguilles de remplissage (42, 43) du mécanisme de remplissage, une pompe de lavage (78), des vannes électromagnétiques (711, 79, 710), et une conduite pour drainer le liquide résiduel dans le creux de lavage d'aiguille de remplissage (47) produit en nettoyant le mécanisme de remplissage jusqu'au creux de liquide résiduel principal (73).

6. Analyseur d'immunité entièrement automatique selon la revendication 1, dans lequel le dispositif de régulation de température (8) est une plaque de chauffage électrique de type disque correspondant au composant disque de réaction (2).

7. Analyseur d'immunité entièrement automatique selon la revendication 1, dans lequel le dispositif injecteur (41) du mécanisme de remplissage (4) est un dispositif entraîné par piston consistant en un moteur pas à pas et une vis et ayant une structure intégrée.

8. Analyseur d'immunité entièrement automatique selon la revendication 1, dans lequel un dispositif de reconnaissance de code à barres intégré (10) pour reconnaître un code à barres d'article sur une poignée du récipient de réactif (3) et émettre un signal de reconnaissance vers le système de commande est agencé sur la plaque fixe supérieure (14) .

9. Analyseur d'immunité entièrement automatique selon la revendication 1, dans lequel un codeur (229) pour détecter l'angle de rotation d'un arbre principal (221), fournir des informations de déplacement du composant disque de réaction (2) au système de commande et commander l'état de fonctionnement d'un moteur pas à pas (226) par l'intermédiaire du système de commande est agencé à l'extrémité inférieure de l'arbre principal (221) et positionne de manière précise le composant disque de réaction.

10. Analyseur d'immunité entièrement automatique selon la revendication 1, dans lequel le circuit de commande d'instrument du système de commande comprend une interface USB pour communiquer avec un hôte de commande, et de 1 à 10 analyseurs d'immunité entièrement automatiques peuvent être commandés par un hôte de commande.

11. Procédé pour mettre en oeuvre une détection immunitaire en utilisant l'analyseur d'immunité entièrement automatique selon l'une quelconque des revendications 1 à 10, comprenant les étapes suivantes :
1) mettre un échantillon à détecter dans un trou d'échantillon d'un récipient de réactif, un code à barres d'informations d'article correspondant à l'échantillon étant collé à une poignée du récipient de réactif ;
2) serrer le récipient de réactif dans un creux de chargement d'un composant disque de réaction ;
3) démarrer un système de commande de telle sorte que le composant disque de réaction est en fonctionnement, faire tourner le récipient de réactif à une position correspondant à un mécanisme de remplissage, ajouter l'échantillon au trou d'échantillon dans un trou de dilution par le mécanisme de remplissage, ajouter le diluant à un trou de réactif dans le trou de dilution en vue d'une dilution, puis ajouter le mélange dans un trou de réaction, et réaliser une réaction et un lavage en fonction de conditions prédéfinies du système de commande, dans le processus de lavage le système de commande calculant la consommation des trois types de liquide de travail en fonction des signaux de détection de trois dispositifs de détection de pesée en ligne au niveau des parties inférieures d'une bouteille de liquide de nettoyage, d'une bouteille de liquide de lavage A et d'une bouteille de liquide de lavage B avant et après lavage, déterminant si le processus de lavage est normal, et fournissant une alarme pour alerter si le processus de lavage n'est pas normal ; lire immédiatement une valeur d'absorbance en adoptant une méthode dynamique après l'ajout du dernier réactif, ou injecter une solution d'arrêt dans le trou de réaction après que la réaction est achevée pour arrêter la réaction, puis lire la valeur d'absorbance en adoptant une méthode de point final ; et
4) faire tourner le récipient de réactif à une position correspondant à un système de détection optique par le composant disque de réaction lorsque la valeur d'absorbance est lue, réaliser une détection optique sur une substance dans le trou de réaction par le système de détection optique, fournir un résultat de détection au système de commande, et traiter, stocker et délivrer en sortie le résultat de détection par le système de commande.

12. Procédé de détection immunitaire selon la revendication 11, dans lequel le réactif comprend un antigène ou anticorps, un antigène ou anticorps de marquage enzymatique, un substrat chromogène enzymatique, un diluant, une solution d'adsorption ou une solution d'arrêt en vue d'une détection, le type spécifique du réactif est défini en fonction de l'exigence d'un article de détection, et ces réactifs sont reçus collectivement dans un dispositif de réactif indépendant jetable spécifique pour un individu.
